# EUROPEAN PATENT APPLICATION

(11) **EP 1 522 946 A1**
(43) Date of publication of application: **13.04.2005**
(21) Application number: 04256246.2
(22) Date of filing: 08.10.2004
(51) Int. Cl.: G06F 17/60

(54) **Computer implemented trading system**

(30) Priority: 09.10.2003 GB 0323695
(71) Applicant: Duvacy Ltd, Brighton BN1 6AG (GB)
(72) Inventor: Taylor, Ian, c/o Duvacy Ltd, Brighton BN1 6AG (GB); Hooper, Marcus, c/o Duvacy Ltd, Brighton BN1 6AG (GB); Semark, Richard Mark, c/o Duvacy Ltd, Brighton BN1 6AG (GB)
(74) Representative: Beresford, Keith Denis Lewis

(57) **Abstract**

A computer implemented trading system is described comprising a plurality of buy computers (1,2) connected via a communications network (3) to a plurality of seller computers (4,5), a plurality of public exchange computers (6,7) and a trading platform computer (8). The trading platform computer (8) is arranged to receive order data from the buy computers (1,2) and the seller computers (4,5). An order processing system (14) provided on the trading platform computer (8) processes the received data to generate output data indicative of the orders received by the order processing system (14) but which is processed so as to obscure the detail of received orders. The generated data is then dispatched back to the buyer computers (1,2) and seller computers (4,5) where it is displayed as part of a user interface. By generating data indicative of the content of received orders but which obscures the detail of those orders, users are provided with information about the likelihood of an order entered into the order processing system (14) being matched but are prevented from using the received data to manipulate order prices.

## Description

The present application concerns computer implemented trading systems. In particular, the present application concerns computer trading systems for trading equities such as stocks and shares, bonds and derivatives.

Many computerised trading systems exist for facilitating the trade of equities. An example of an existing trading system is the London Stock Exchange "SETS" system. The SETS system is what is known as a public order book system. Individuals wishing to trade a particular instrument submit their orders to the SETS trading system identifying whether they wish to buy or sell a share, the number of shares they require and a limit price. This information is then made publicly available to other users of the system. If orders to buy and sell the same instrument are submitted which are compatible in terms of price, the SETS trading systems matches these two orders to one another and thereby effects a trade.

One of the problems with existing public order systems is that the size and price of each potential trade is made publicly available to other users. Where someone has a large order to fulfil, if such a large order is submitted to a public trading system, the fact that a large order exists will therefore be made public and hence the price at which the order can be fulfilled can be adversely affected. As a result, users are discouraged from using public systems when they have large orders and hence the public ally available information about trades is often of limited value.

An alternative approach is for users to divide a large order into a number of smaller orders. This is undesirable because although it can hide the existence of a large order it is necessary to input and transmit multiple orders to the system. Further, the large number of smaller orders will be made public and can have the same effect on price as a single large order.

An alternative trading system is therefore required which would enable users to submit large orders and make information about such large orders available to other users without that information being in a form which will enable the other users to manipulate prices.

A further aspect of existing trading systems is that they provide the means by which asset managers make payments to brokers. Conventionally, if an asset manager takes advantage of financial research conducted by a broker, often the asset manager will contact the broker and request that the broker affects a trade on their behalf. When doing so, the broker charges a commission. By routing orders to brokers the asset managers are able to effectively pay for research and other services provided by the brokers.

A problem with existing system in which orders are routed to brokers is that although they provide a means for making payments, the resultant price for the order is constrained by the ability of the broker to match that order at the best possible price available in the market at that time. The ultimate client of the asset manager may therefore not get the best possible price for their trade. A computer trading system is therefore required which can fulfil the contradictory aims of enabling asset managers to reward brokers for services they provide but which enables individual orders to be matched at the best price.

In accordance with one aspect of the present invention there is provided:
a computerized trading system comprising;
an order database configured to store order data defining a plurality of parameter values; and
a matching engine operable to process orders stored in said order database to identify compatible orders for matching; and
an interface generation module for generating and outputting data indicative of the extent to which orders defined by order data stored in said order database is compatible with matching to a reference order, wherein said interface generation module is arranged to generate said data by calculating difference data indicative of the extent parameter values of orders defined by order data in said order database are compatible with matching to a reference order and further processing said calculated difference data to derive data indicative of the extent of said compatibility which does not indicate the parameter values of said stored order data.

In accordance with another aspect of the present invention there is provided a computerised trading system comprising:
means for matching orders to effect trades;
means for calculating commission payments due on said trades;
means for generating settlement instructions to effect trades corresponding to matched orders and to cause said calculated commission payments to be paid to a third party; and
means for users paying commission payments to identify to said third party to whom commission payments paid to said third party by said users should be sent.

An embodiment of a trading system described in terms of the functional software modules and data structures which enable aspects of the invention to be performed will now be described with reference to the following drawings in which:
Figure 1 is a schematic block diagram of a computer network embodying a trading system in accordance with an embodiment of the present invention;
Figure 2 is a schematic block diagram of a trading module of a buyer computer of the computer system of Figure 1;
Figure 3 is a schematic block diagram of a trading module of a seller computer of the computer network of Figure 1;
Figure 4 is a schematic block diagram of an order processing system of a trading platform computer of the computer network of Figure 1;
Figure 5 is an illustrative example of a user interface generated by the trading rules maintenance modules of the trading modules of Figures 2 and 3;
Figure 6 is a schematic block diagram of a trading rule record stored within the trading rules database of the order processing system of Figure 4;
Figures 7a, b and c are a flow diagram of the processing of the order processing system of Figure 4 for generating and matching orders;
Figure 8 is an illustrative example of a user interface generated by the order and creation of amendment modules of the trading modules of Figures 2 and 3;
Figure 9 is a block diagram of an order record stored within the current orders database of the order processing system of Figure 4;
Figure 10 is a flow diagram of the processing of the order matching module of the order processing system of Figure 4 to determine a list of potential order matches;
Figure 11 is a block diagram of a matched order record within the matched orders database of the order processing system of Figure 4;
Figure 12 is a schematic block diagram of an accumulated commission record within the accumulated commission database of the order processing system of Figure 4;
Figure 13 is a flow diagram of the processing of commission records to determine commission payments;
Figure 14 is an illustrative example of a user interface generated by the allocate commission module of the trading module of Figure 2;
Figure 15 is a flow diagram of the processing of the interface update module of the order processing system of Figure 4;
Figure 16 is an illustrative table of the number of closeness measures, random numbers and weight values calculated by the user interface module of Figure 4 for three example orders;
Figure 17 is an exemplary user interface generated by the market review module of the trading modules of Figures 2 and 3; and
Figure 18 is a flow diagram illustrating the processing of the hint interface module of the trading modules of Figures 2 and 3.

### Overview of Computer System

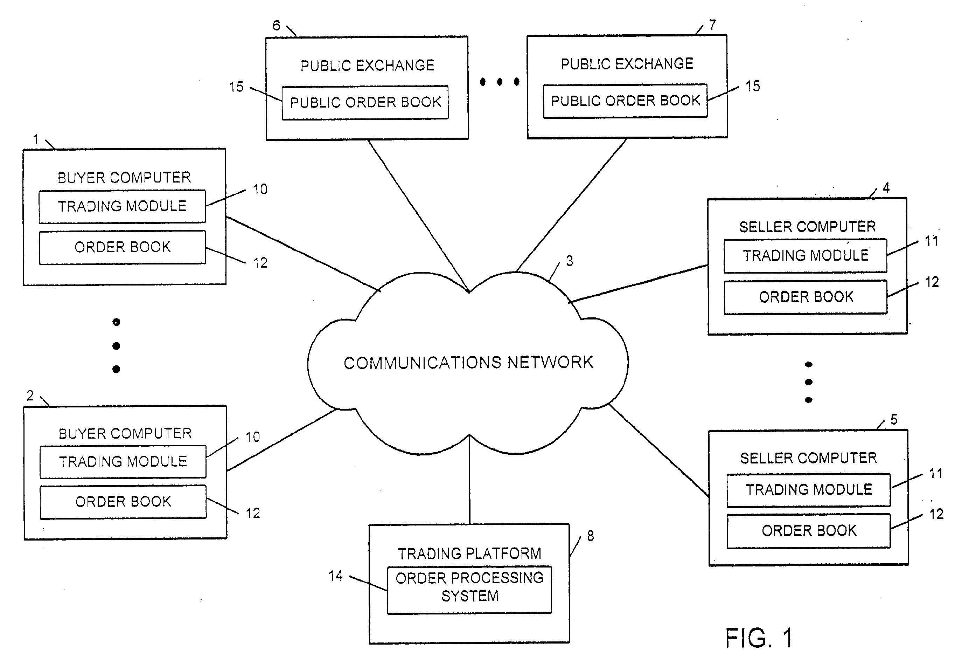

Figure 1 is a schematic block diagram of a computer network embodying the present invention. The computer network of Figure 1 comprises a plurality of buyer computers 1,2 that are connected via a communications network 3 such as a wide area network (WAN) or public switching telephone network (PSTN) to a plurality of seller computers 4,5. Also connected to the communications network 3 are a plurality of public exchange computers 6,7 and a trading platform computer 8.

In this embodiment within the memories of each of the buyer computers 1,2 and seller computers 4,5 is stored a trading module 10,11 and an order book 12. As will be described in detail later the trading modules 10,11 of the buyer computers 1,2 and seller computers 4,5 are arranged to forward orders via the communication network 3 to the trading platform computer 8. When orders are received by the trading platform 8 they are processed by an order processing system 14 provided within the trading platform computer 8 which enables orders to be matched. Additionally the order processing system 14 interacts via the communications network 3 with the public exchanges 6,7 so as to match orders received from the buyer computers 1,2 and seller computers 4,5 with publicly available orders stored within public order book databases 15 on the public exchanges 6,7.

The applicants have appreciated that there are a number of limitations with currently existing order processing systems which prevent users from achieving the best possible matches for orders.
Conventionally, when an asset manager wishes to reward a broker for trading related services, the asset manager sends an order for matching by the broker. This rewards the broker in two ways. Firstly the broker charges commission on the order and secondly the order increases the liquidity offered by the broker to other asset managers as the broker is able to match other orders to the order received from the first asset manager. Routing an order to a broker therefore enables an asset manager to pay for services such as research services received from the broker. However, routing an order to a specific broker does not guarantee the asset manager achieves the best possible price for their order.

To address this problem in accordance with one aspect of the present invention the order processing system 14 is arranged to separate commission payments and order matching enabling orders to be more efficiently matched whilst still enabling asset managers to route commission payments to brokers.

A second aspect of the present invention involves the feedback users receive from the order processing system 14. In a conventional stock exchange order book system details such as size and price of offers to buy and sell are made public ally available. Often this discourages the use of public exchanges as, where for example a large order is to be filled, making the existence of the order public can adversely effect the price of possible matches.

In order to address this problem in accordance with this aspect, the order processing system 14 provides feedback on existing orders in two different ways. Firstly, the order processing system 14 generates display data representative of existing orders where the generation of data and means of display are such to give an indication of existing orders for a particular instrument but which obscures the details of those orders from users. Secondly, the order processing system 14 also provides users with an indication of the likelihood of orders on users order books 12 which have not been submitted to the order processing system 14 being matched to existing orders. Again to avoid providing users with excessive information this feedback is processed so as to obscure the exact details of any orders which might exist presently on the order processing system 14.

Another aspect of the invention concerns the flexibility of the order processing system 14 to enable orders to be matched. In order to provide users with enhanced flexibility, the order processing system 14 is arranged to permit multiple price generating and matching methods to be applied to an order and also to access public order books 15 on existing exchanges 6, 7 to attempt to match orders.

Finally, the order processing system 14 is also arranged to enable users to select certain forms of validation of their matched orders such as ensuring an order is matched at no less than a public price, or that the privately matched transaction is caused to be reflected in public price information where desired.

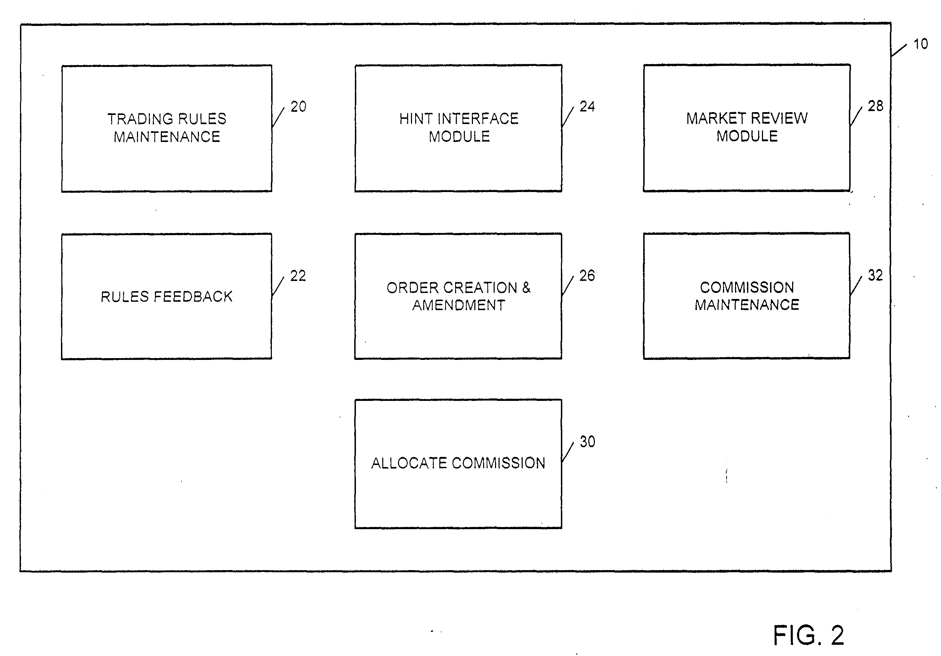

The functional components of the trading modules 10,11 within the buyer computers 1,2 and seller computers 4,5 and the functional components of the order processing system 14 which enable the order processing system 14 to provide these advantages will now be described in greater detail with reference to Figures 2, 3 and 4.

### Buy Side Trading Module

In this embodiment the term "buy side" is taken to refer to trading modules 10 utilised by ultimate purchasers or sellers of equities such as asset managers and a buyer computer 1,2 would be utilised by a "buy side" firm. In contrast, the term "sell side" is taken to refer to intermediate brokers of equities and the seller computers 4,5 would be used by such brokers.

In general, any user of a trading system can interact with any other user through the order processing system 14. Thus for example two buy side users could interact or two sell side users could interact or alternatively a buy side and a sell side user could interact. The distinctions between buy side users and sell side users are only of importance when determining commission payable on transactions as sell side users (brokers) charge commission to buy side users (asset managers) but, buy side users do not charge commission. The trading modules on the buyer computers 1,2 and seller computers 3,4 therefore differ so as to be able to cope with the differences of how commission is handled as will now be explained.

Figure 2 is a schematic block diagram of a trading module 10 of a buyer computer 1, 2.

In this embodiment a trading module 10 within a memory of a buyer computer 1, comprises a trading rules maintenance module 20, a rules feedback module 22, a hint interface module 24, an order creation and amendment module 26, a market review module 28, an allocate commission module 30 and a commission maintenance module 32.

As will be described in detail later, the trading rules maintenance module 20 is a software module which enables the user of a buyer computer 1,2 to input rules which are then stored within the order processing system 14 of the trading platform 8. These rules set parameters that define how the order processing system 14 manages orders transmitted to the trading platform computer 8. Typical examples of rules which may be input could be rules which precluded the use of certain counter parties to transact business with, preclude the use of public exchanges and their associated order books when matching orders or rules requiring certain large orders to be broken up in particular ways.

As will be described when an order is submitted to the trading platform computer 8 the rules applicable to an order are monitored and where the application of particular rules prevent an order from being matched, this is recorded by the order processing system 14. The rules feedback module 22 then enables a user to access the stored data to review the extent to which different rules have prevented orders from being matched.

As noted above, the order processing system 14 is arranged to generate and output data indicative of the orders being processed by the trading platform computer 8. This data is utilised by the hint interface modules 24 and the market review module 28 of the trading modules 10,11.

Specifically as will be described the hint interface module 24 is arranged to generate a user interface providing users with a visual indication of the likelihood that uncommitted orders stored within the order book 12 of the computer where the trading module 10 is stored, will be matched with orders already committed to the order processing system 14. The market review module 28 is arranged to generate a user interface providing an indication of the extent to which other orders for an instrument exist within the order processing system 14 and how close such orders come to matching orders a user has already submitted to the order processing system 14 without providing a user with specific details of other users orders.
The order creation and amendment module 26 is arranged to generate a user interface to enable a user to submit an order to the order processing system 14 of the trading platform 8 and also to enable a user to amend details of a submitted order based on feedback received from the market review module 28.

Finally, the trading modules 10 of the buyer computer 1,2 are each provided with an allocate commission module 30 to enable users to identify which sell side firms should receive commission payments and a commission maintenance module 32 to enable buy side users to identify commission rates that they are willing to pay. These two modules 30,32 then interact with the order processing system 14 to deal with the commission payments separately from the matching of orders as will be described.

### Sell Side Trading Module

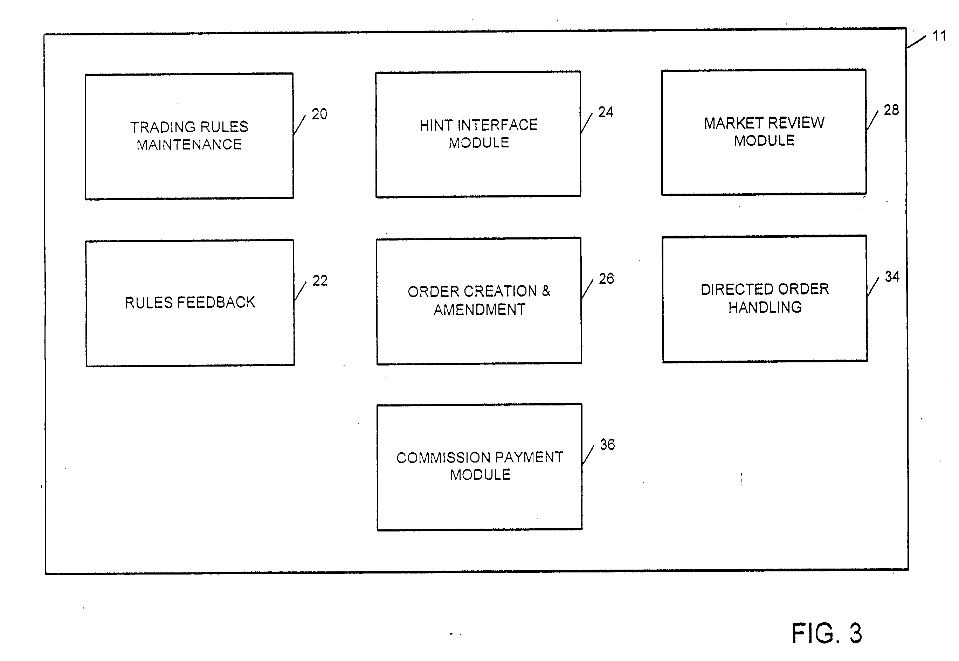

Figure 3 is a schematic block diagram of the functional components of a trading module 11 within the memory of a seller computer 4,5.

As in the case of a trading module 10 of a buyer computer the trading module 11 of a seller computer 4,5 comprises a trading rules maintenance module 20, a rules feedback module 22, a hint interface module 24, an order creation and amendment module 26 and a market review module 28.

These components in the trading module 10 of a seller computer 4,5 perform exactly the same functions as the corresponding components of a trading module 10 on a buyer computer 1,2. However, instead of the allocate commission module 30 and commission maintenance module 32 of a buy side trading module 10 in the case of trading module 11 within the memory of a seller computer 4,5 these modules are replaced by a directed order handling module 34 and a commission payment module 36 which are arranged to process the sell side of directed orders and commission payments.

### Order Processing System

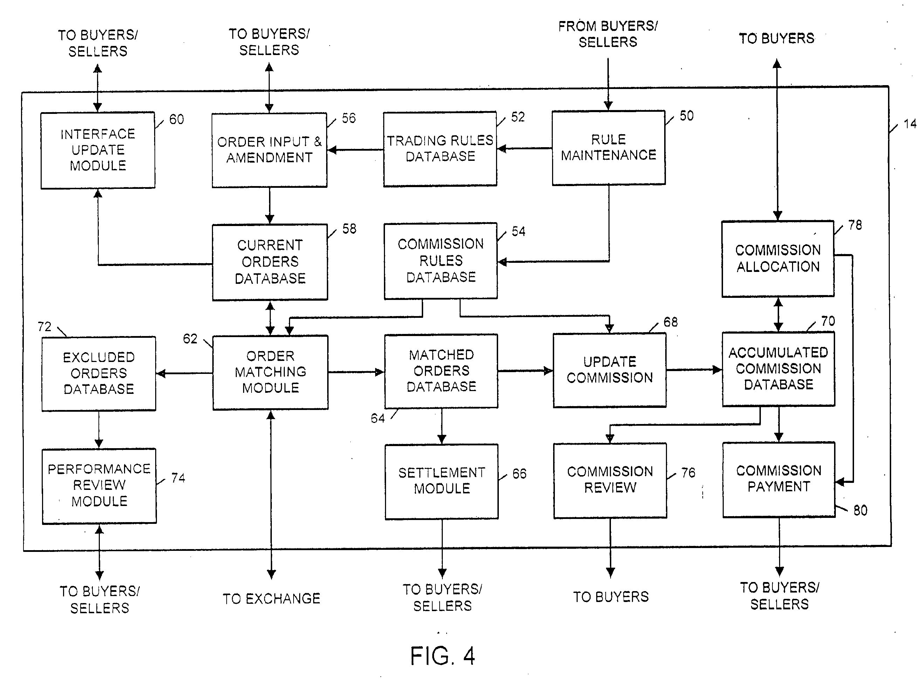

The structure and function of the order processing system 14 will now be described in greater detail with reference to Figure 4 which is a schematic block diagram of the functional modules of the order processing system 14.

In this embodiment the order processing system 14 comprises a rule maintenance module 50 arranged to receive instructions relating to the input and modification of trading rules and rules for calculating commissions due on trades. These instructions are received via the communications network 3 from the order creation and amendment modules 26 of the trading modules 10,11 and the commission maintenance modules 32 of buy side trading modules 10 respectively. In response to instructions relating to trading rules from a trading rule maintenance module 20 the rule maintenance module 50 stores data defining the received trading rules in a trading rules database 52. When the rule maintenance module 50 receives data relating to commission calculation rules from a commission maintenance module 32 of a buy side trading module 10 these rules are stored within a commission rules database 54.

In this embodiment the commission rules stored within the commission rules database 54 define for each buy side user and sell side user a commission rate applicable to a trade. Thus for example the commission rules generated for one buy side user might identify that a commission of ten basis points (a 0.1% commission) on a trade is to be applied to trades involving one identified sell side firm as a counter party and a commission rate of 12 basis points (0.12% commission) is to be applied to transactions involving a different sell side counter party.

As will be described in detail later these commission rules are utilised to convert orders generated by seller computers 4,5 which are exclusive of commission into orders which are inclusive of commissions so that the best match for a buy side order can be made. Additionally, the rules in the commission database 54 are also used to separate the processing and matching of orders from the payment of commission so that greater flexibility in order matching can be achieved.

Also provided as part of the order processing system 14 is an order input and amendment module 56 and a current orders database 58. The order input and amendment module 56 is arranged to interact with the order creation and amendment modules 26 of the buy side and sell side trading modules 10,11 and with trading rules stored in the trading rules database 52 to enable users to input orders into the order processing system 14. When an order has been input the order is passed by the order input and amendment module 56 to the current orders database 58 which stores data representative of the order submitted to the order.

In this embodiment, the current orders database 58 is arranged to interact with an interface update module 60 and an order matching module 62 in addition to the order creation and amendment module 56.

The interface update module 60 is arranged to interact with the market review module 28 of the trading modules 10,11 on the buyer computers 1,2 and seller computer 1,5 so as to process the data representing orders in the current orders database 58 and convert the order data into display data indicative of the general spread of differences of orders for particular instruments. As will be described this is achieved whilst preventing users from obtaining specific information about other orders submitted to the order processing system 14.

In contrast to the interface update module 60 which merely generates data indicative of orders stored in the current orders database 58, the order matching module 62 utilises the order records stored in the current order database 58 together with commission rules stored in the commission rules database 54 to determine whether received orders can be matched to one another or alternatively matched with orders present on the public orders books 15 of the public exchanges 6,7.

If an order can be matched, the order matching module 62 causes the current orders database 58 to updated to reflect the match and generates a new record representative of the matched orders in a matched orders database 64.

The generated matched order record within the matched orders database 64 is then utilised by an update commission module 68 which is arranged when a buy side order has been matched to a sell side order to retrieve an appropriate commission rate to be applied to the order from the commission rules database 54 so that the required commission can be made to be paid when settlement of the matched order is effected. When a commission has been calculated a record of the commission nominally to be paid to the sell side counter party in the matched order is stored by an update commission module 68 in an accumulated commission database 70 for later processing. The generated matched order record is then utilised by a settlement module 66 to communicate to the respective parties in an anonymous manner to effect the deal represented by the matched order record including any required commission payments.

If the order matching module 62 identifies that an order within the current orders database 58 could be matched but is prevented from being matched by a trading rule being applied to an order, in this embodiment the order matching module 62 causes a record of the fact that a match is being prevented to be stored within an excluded orders database 72. By generating such a record and providing a performance review module 74 to enable users utilising their rules feedback module 22 to access these records users can determine the extent to which different trading rules applied to different orders are effecting the ability of those orders to be matched and hence enable users to revise their trading strategies appropriately.

As described the order processing system 14 is arranged to generate records indicating accumulated commission to be paid from buy side users and to sell side users. These records are stored in the accumulated commission database 70.

In order to separate the payment of commission from the matching of orders, in this embodiment the settlement module 66 is arranged to generate settlement instructions which cause any commission payments to be initially paid to the operator of the trading platform computer 8. The allocated commission database 70 then provides a record of sell side users to whom the accumulated commission should nominally be paid.

However, since the sell side users will have already benefited from the increased liquidity arising from having matched a buy side user's order, the order processing system 14 includes a commission review module 76 and a commission allocation module 78 which are arranged to interact with the allocate commission module of the buy side computer trading modules 10 to enable buy side users to reallocate accumulated commissions to sell side users they wish to reward.

When instructions on a desired allocation have been received, a commission payment module 80 is then invoked which utilizes updated records within the accumulated commission database 70 to generate instructions to inform the commission payment module 36 of the sell side computer trading module 11 of the commissions that they will in fact receive.

### Trading Rules Generation and Storage

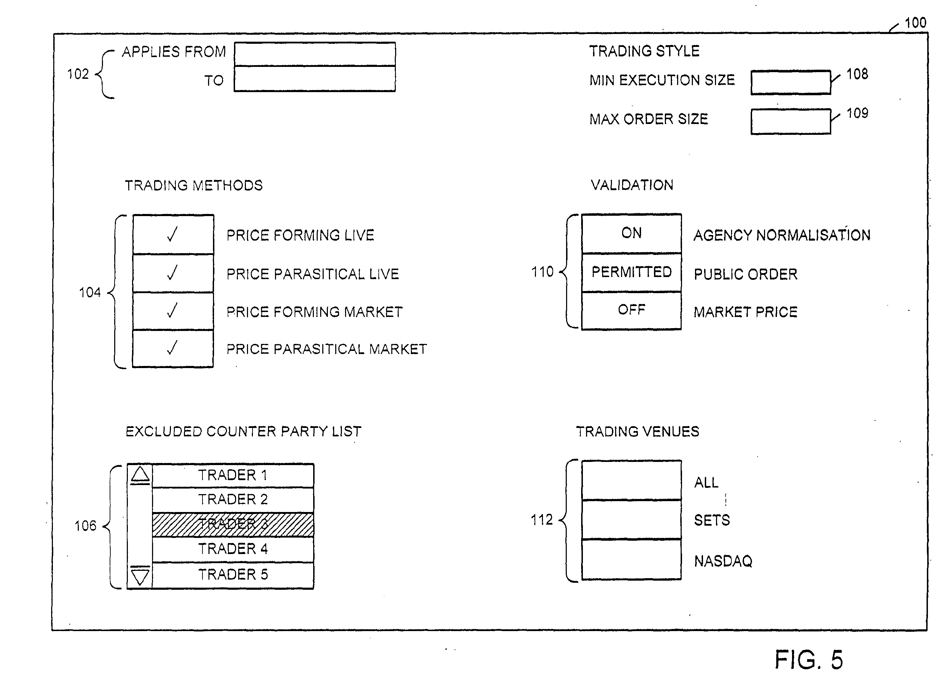

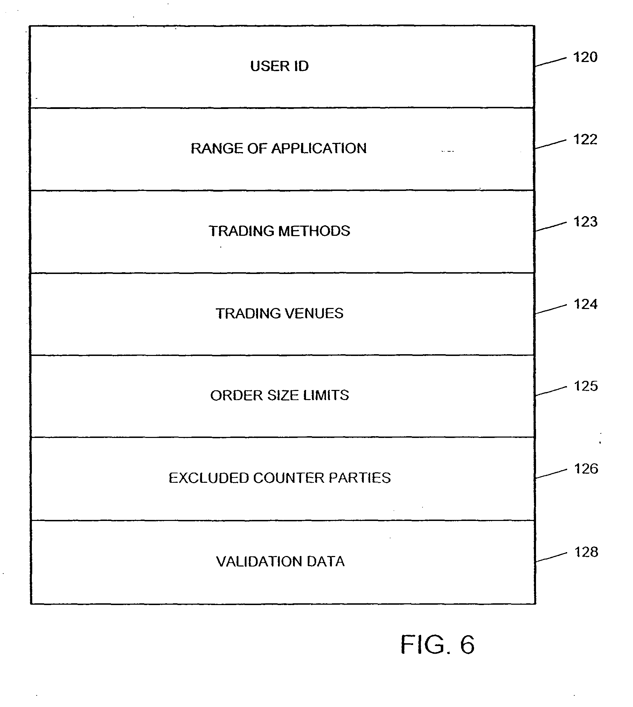

The generation and storage of trading rules within the trading rules database 52 of the order processing system 14 will now be described in detail with reference to Figures 5 and 6.

When a user wishes a new trading rule to be stored within the trading rules database 52 the user invokes the trading rules maintenance module 20 of the trading module 10,11 stored within their computer 1,2,4,5. When the trading rules maintenance module 20 is invoked the trading rules maintenance module 20 generates a user interface enabling a user to input data defining the new trading rule.

Figure 5 is an illustration of an exemplary user interface 100 for inputting data indicative of a trading rule for storage in the trading rules database 52.

In the exemplary interface 100 of Figure 5, a pair of windows 102 are provided at the top left hand corner of the interface 100 for inputting data defining time limits for the application of the rule to be generated.

Below the windows 102 for inputting time limits are a series of four check boxes (104) for selecting trading methods for generating prices for orders. In this embodiment the four possible trading methods are: price forming live, price parasitical live, price forming market and price parasitical market.

In the case of orders generated using either a price forming live or a price parasitical live price calculation, when an order is submitted to the order processing system 14, it is immediately made available for matching with all other similar orders whilst the order remains present in the current orders database 58. In contrast for orders for which the price forming market and price parasitical market options are selected, periodically an auction is declared by the order processing system 14 and all price forming market and price parasitical market orders present within the current orders database 58 are attempted to be matched to one another within those auctions.

As will be described, for the price forming live and price forming market options, the price for matching an order is determined based on the limit price entered by a user. In contrast for the price parasitical live and price parasitical market orders a price for matching is determined by obtaining current price information from a public order book 15 stored on a relevant public exchange 6,7.

Beneath the check boxes for selecting trading methods 104 in the exemplary user interface 100 of Figure 5 is provided a menu and scroll bar 106 for selecting excluded counter parties. In use a user is able to select entries from the excluded counter party list and thereby prevent their orders from being matched with the identified counter parties. In the case of the exemplary illustration of Figure 5 the menu 106 is showing with trader 3 highlighted indicative of the exclusion of matches with trader number 3.

At the top right hand side of the user interface 100 of Figure 5 are a minimum execution window 108 and a maximum order size window 109. By inputting percentages into these windows a trader is able to set the minimum percentage of an order which can be matched off at any one time and also a maximum size of order relative to the normal trading volume for the order processing system 14 for a particular instrument. Thus in this way a user is able to enter into the order processing system 14 a single large order which can then be automatically processed to be broken down into smaller orders in a way which does not indicate the existence of there being a single large order on the system which might affect the possible prices for the order.
Beneath the windows 108,109 for entering a minimum execution of size and a maximum order size are three windows 110 for selecting different types of validation of orders. In this embodiment the different types of validation comprise: agency normalisation, public order validation and market price validation.

When agency normalization is selected when a sell side order is present within the order processing system 14 whether another order is matched to that sell side order is determined on the basis of a price which takes into account any commission payable on the order.

Public order validation can be either excluded, permitted or required. If an order requires public order validation, it can only be matched with other orders requiring or permitting public order validation. When such an order is matched in the order processing system 14, the matched orders are sent to a public exchange 7,8 for settlement thereby publicising the price of the match and hence improving the price information available on the public exchange 6,7.

The final validation option in this embodiment is market price validation by which when an order is to be matched by the order processing system 14 the order processing system 14 checks that the match price does not exceed any public available price on the public order book 15 of the public exchanges 6,7. If the price of the match does not equal or better the public ally available price the matching of an order is then prevented.

Beneath the windows for selecting validation options 110 are a final series of check boxes 112 for identifying allowable public exchanges 6,7 for which a trader wishes to deal. By making an appropriate selection of the check boxes, when an order is submitted to the order processing system 14 the order processing system 14 can be made to attempt to match an order not only against any order present in the order processing system 14 but also any public ally available orders on the public order books 15 of the selected exchanges.

Using a keyboard, mouse or other suitable input device on the computer 1;2;4;5 once the user interface 100 is displayed the user is able to enter data in the windows and check boxes of the user interface 100 to identify the desired trading rules which will then be applied to most of the trades they wish to make. When a user is satisfied with the data entered into the user interface 100 the user then inputs an instruction to the trading rules maintenance module 20 which causes the trading rules maintenance module 20 to generate a record representative of the users selections and dispatches the record to the trading platform computer 8 via the communications network 3.

Figure 6 is a schematic block diagram of the structure of a record generated by a trading rules maintenance module 20.

In this embodiment, the record comprises a user ID 120 identifying the user on whose behalf the record has been generated; range of application data 122 corresponding to the time limits entered in the time of application windows 102 in the user interface 100; trading methods data 123 indicative of the selection of trading methods made through the trading method check boxes 104; trading venues data 124 indicating the selection of trading venues from the trading venue check boxes 112; order size limit data 125 corresponding to the percentages entered in the minimum execution size window 108 and maximum order size window 109; an excluded counter parties list 126 comprising a list of user IDs for all the traders selected from the excluded counter party menu 106; and validation data 128 indicative of the combination of validation options selected from the validation windows 110.

When a new trading rule record has been generated by the trading rules maintenance module 20 it is dispatched by the communications network 3 to the trading platform computer 8. Here it is received by the rules maintenance module 50 of the order processing system 14. In the case of a new trading rule record the rule maintenance module 50 passes the record to the trading rules database 52 where the record is stored.

Should a trader wish to revise their trading rules, the trading rules maintenance module 20, is caused to send an instruction to the trading platform computer 8 to cause the rule maintenance module 50 to retrieve the trading rule records for a particular user from the trading rules database 52.

The retrieved records are then dispatched via the communications network 3 back to the trading rules maintenance module 20 which generates a user interface similar to that of Figure 5 which then enables the user to amend an existing rule.
When satisfactory amendments have been made, the user then inputs an instruction into the trading rules maintenance module 20 to cause an amended record to be dispatched to the order processing system 14 to replace the previously existing record. Thus in this way a trader is able to enter and amend a trading records for defining the manner in which most of their trades are to be processed and cause the records the to be stored within the trading rules database 52 to simplify the input of data for specific orders as will now be described.

### Generation and Matching of Orders

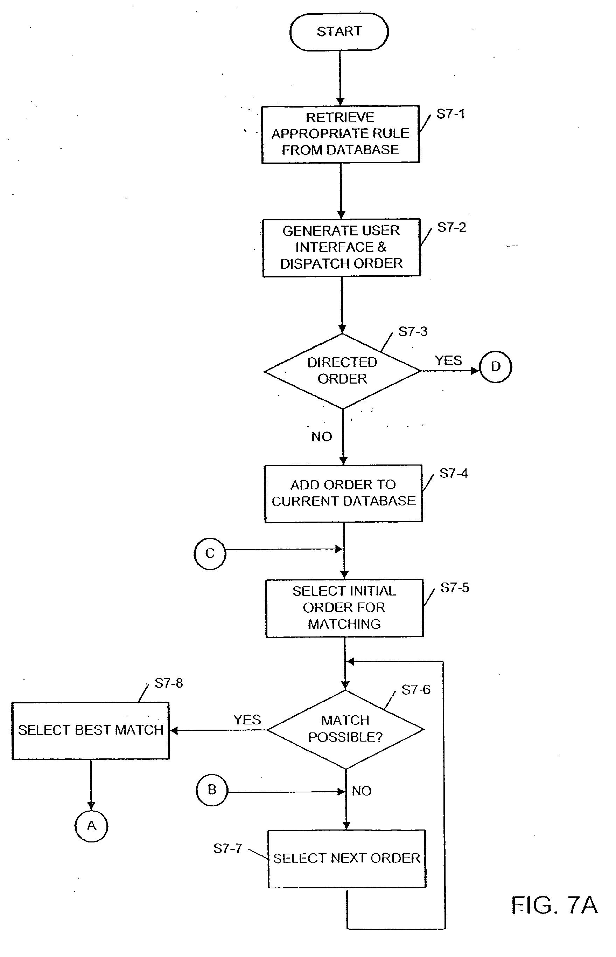

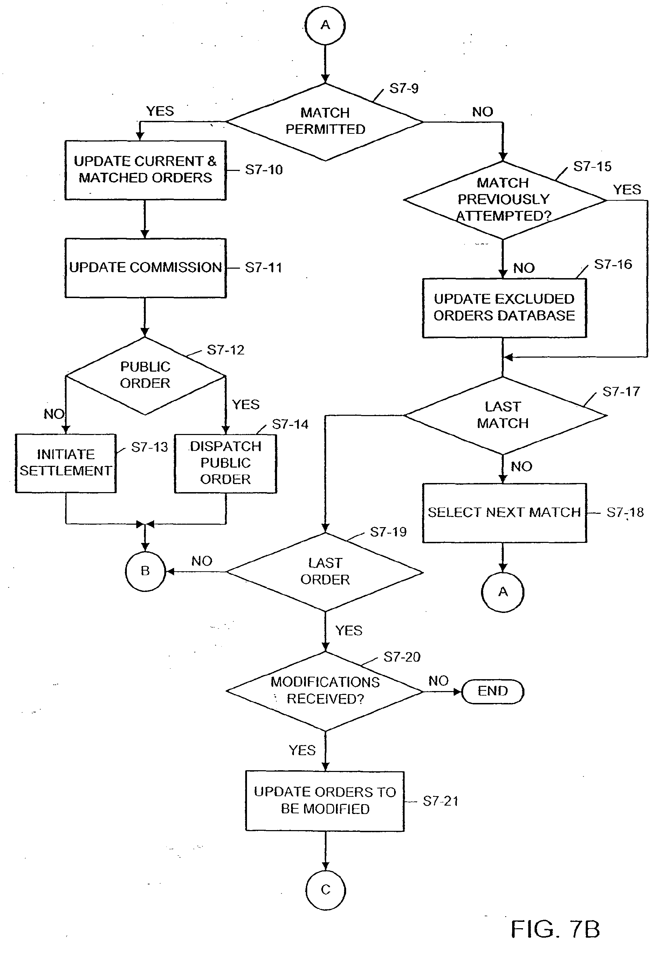

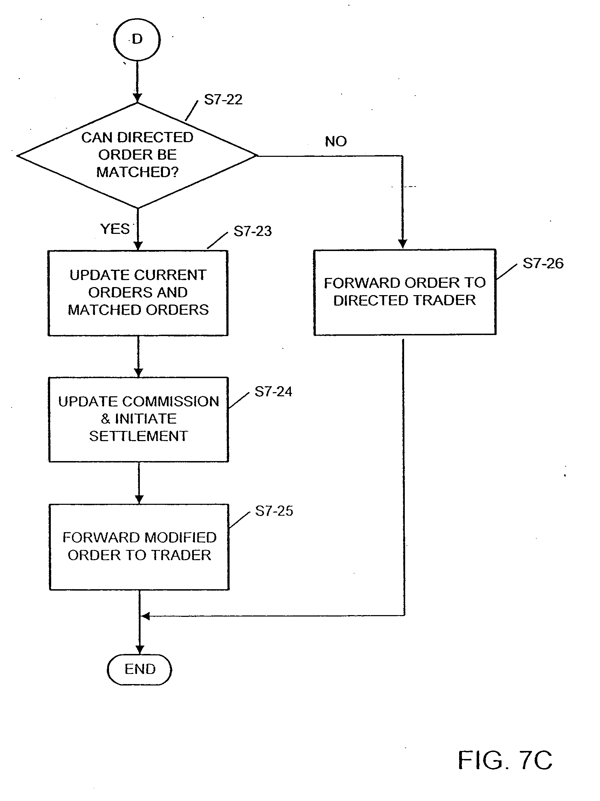

The use of the order creation amendment module 26 of the trading modules 10 and the matching of orders by the order processing system 14 will now be described in detail with reference to Figures 7A-C, 8, 9, 10 and 11.

Figures 7A-C are a flow diagram of the processing of an order by the order processing system.

Initially when a user wishes to enter an order into the order processing system 14 the user invokes the order of creation and amendment module 26 of their trading module 10, 11 to cause the order creation and amendment module 26 to send an instruction to the order processing system 14. When an instruction from a trading module 10,11 is received by the order processing system 14 it is passed to the order input and amendment module 56 which proceeds to retrieve (S7-1) from the trading rules database 52 a copy of the trading rules record having a user ID 120 corresponding to the user from whom the instruction has been received and for which the range of application data 122 corresponds to the current time.

When the order input and amendment module 56 has retrieved a copy of the applicable rules record from the trading rules database 52, the order input and amendment module 56 dispatches a copy of the record via the communications network 3 back to the computer from which an instruction has been received.

When the trading rule record is received by the computer, the order creation and amendment module 26 then (S7-2) generates a user interface for inputting specific order details.

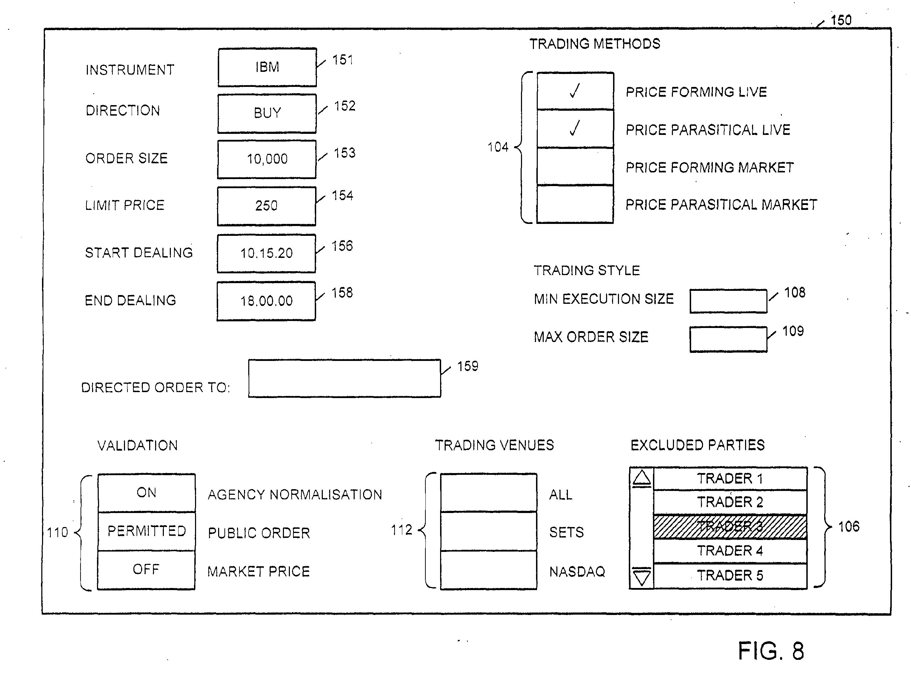

Figure 8 is an illustration of an exemplary order input interface 150 generated by an order creation and amendment module 26.

In the exemplary interface 150 of Figure 8, on the left hand side of the interface 158 are a series of windows 151 - 159 for inputting details specific to an individual order. In this embodiment these windows comprise an instrument window 151 for a user to input data defining an instrument they wish to buy or sell; a direction window 152 for inputting data identifying whether the order is a buy or sell order; an order size window 153 for inputting the number of shares of the instrument identified in the instrument window 151 which the user wishes to buy or sell; a limit price window 154 for inputting a limit price for the transaction; a start dealing and end dealing window 156, 158 for inputting the time limits within which the potential order may be matched and a directed order window 159 for identifying any specific counter party to which an order or a commission from the order is to be directed.

The remainder of the user interface 150 comprise a series of trading methods check boxes 104, an excluded parties menu 106, a minimal execution size and maximum order size window 108,109, a series of validation windows 110 and a series of trading venue check boxes 112 identical to the corresponding windows and check boxes in the user interface 100 for entering trading rules.

When the user interface 150 is first generated the windows 151-159 specifically relating to the order being generated are initially empty. The remaining windows and check boxes 104 - 112 are all filled in the same manner in which the same manner in which the corresponding windows were filled when the trading rule record being applied to the trade was entered utilizing the trading rules maintenance module 20.

Using an input device such as a keyboard or a mouse a user then enters data into the order specific windows 151 - 159 and overwrites entries in the other windows and check boxes 104 - 112 to specify exactly the details of order that the user wishes to have processed by the order processing system 14.

In this way by storing rules of general application in the trading rules database 52 and enabling users to overwrite those rules for a specific trade, a flexible means for inputting data for effecting a trade is provided as in most cases the generally applicable rules can be utilized and therefore unnecessary extra data entry is avoided.

When a user is satisfied with the order data entered into the user interface 150, the user enters an instruction to the order creation and amendment module 26 to cause data representative of the input selections in the user interface 150 to be transmitted via the communications network to the trading platform computer 8 where the data is received by the order input and amendment module 56.

Returning to Fig. 7A, initially when data is received by the order input and amendment module 56, the order input and amendment module 56 checks (S7-3) whether any data has been entered in the directed order window 59 of the user interface 150. If this is not the case the order input and amendment module 56 then (S7-4) proceeds to generate a new order record which is stored within the current orders database 58.

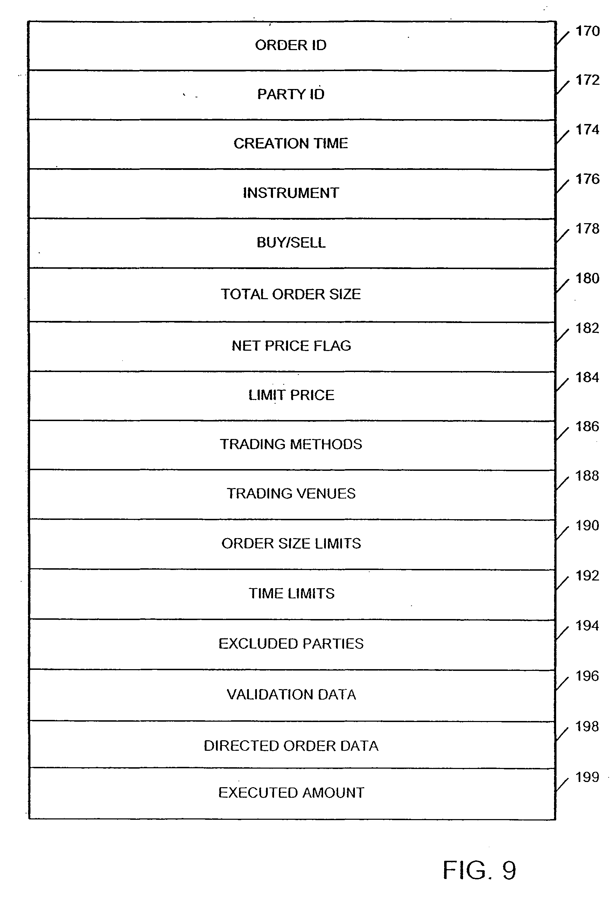

Figure 9 is a schematic block diagram of an order record stored within the current orders database 58. In this embodiment each of the order records within the current order database 58 comprises: an order ID 170 being a unique number generated for each order record; a party ID 172 identifying the user from whom the order has been received; a creation time 174 being the time at which the order data for the order was received by the order processing module 14; instrument data 176 identifying the instrument for which the order relates corresponding to the instrument identifier entered within the instrument window 151 of the order entry interface 150; a total order size 180 corresponding to the total order size input in the order size window 153 of the order entry interface 150; a net price flag 182, a limit price 184 corresponding to the limit price entered within the limit price window 154 of the order entry interface 150; trading methods data 186 identifying the selected trading methods in the trading methods check boxes 104 of the order entry interface 150; trading venues data 118 identifying the selected trading venues in the trading venues check boxes 112 of the order entry interface 150; order size limits 190 corresponding to the minimum execution size and maximum order size data within the minimum execution size and maximum order size windows 108,109 of the order entry interface 150; time limit data 192 corresponding to the times that are entered in the start dealing and end dealing windows 156,158 of the order entry interface 150, an excluded parties list 194 corresponding to the selected excluded parties from the excluded parties menu 106 of the order entry interface 150; validation data 196 corresponding to the validation selections made from the validation windows 110 of the order entry interface 150; directed order data 198 corresponding to the user identification number for the any user identified in the direct order window 159 of the order entry interface 150; and an executed amount 199 which is initially set to zero.

In the case of an order generated by receiving order data from a buyer computer 1,2 the net price flag 182 of the order is automatically set to on. In the case of an order received from a seller computer 3,4, the order creation and amendment module 26 of the sell side trading module 11 is arranged to display as part of the order entry user interface 150 an additional window for indicating whether or not a limit price of an order is inclusive or exclusive of a commission to be paid. Data corresponding to the users selection is then dispatched to the order processing system 14. In the case of an order which is inclusive of commission when an order record is created the net price flag 182 is set to on. If the price is not to be inclusive of commission the set price flag is set to off.

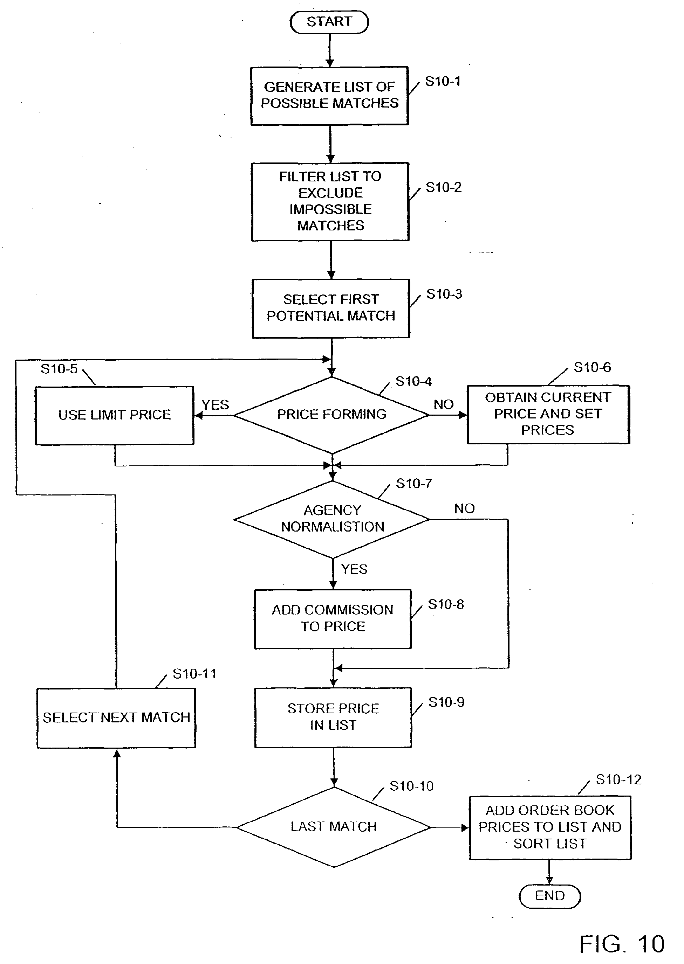

Once a new record has been generated and stored within the current orders database 58, the order matching module 62 then selects (S7-5) one of the records stored within the current orders database and attempts (S7-6) to determine whether the order can be matched to any other orders in the current orders database 58 or to one of the public orders on the public order books 15 of the public exchanges 6,7 as will now be described in detail with reference to Figure 10.

Referring to Figure 10, once an order has been selected for matching, the order matching module 62 initially (S10-1) creates a list of order identification numbers 170 of orders having the same instrument data 176 as the order to be matched and opposite direction data 178.

The generated list is then (S10-2) filtered to eliminate from the generated list order identification numbers 170 of orders which exclude the possibility of matching to the current order.

Thus, for example, for each of the potential matches the excluded party data 194 of the potential match is reviewed and if the excluded party list 194 includes an entry corresponding to the party ID 172 of the order being matched, the order identification 170 of that potential match is deleted from the list of potential matches.

Similarly, where the current time does not fall within the scope of the time limits 192 associated with a potential match or alternatively, where the trading methods 186 identify only a price forming market or price practical market trade methods and there is no current auction being held, the order ID 170 of the potential match is removed from the list.

After the list of potential matches has been filtered to exclude orders which cannot be matched due to limitations in the potential match orders, the order at the head of the list is selected (S10-3). The order matching module 62 then (S10-4) determines whether only price forming options are identified by the trading methods data 186 for the potential match order. If this is the case, the order matching module 62 sets (S10-5) as the price for the potential match the value of the limit price 184 of the potential match order.

If any of the price parasitical options identified by trading methods 186 of the potential match order, the order matching module 162 proceeds to obtain a price for the potential match order by interrogating the public order book data 15 on a public exchange 6,7 via the communications network 3 and utilises the obtained price data for the instrument 176 as price data for that order.

In the case of an order where both price forming and price parasitical price trading methods are identified by the trading methods data 186 for the order, two potential prices for that order are generated and the best price selected.

Once a potential match order has been assigned a price, the order matching module 62 then (S10-7) determines whether the current order being matched has validation data 196 indicating that agency normalisation is required. If this is the case, the order matching module 62 then checks (S10-8) whether the party identifier 172 of the order currently being processed indicates a buy side user and the party identifier 172 of the potential match order indicates a sell side user. If this is the case and the potential match order has a net price flag set to off, the order matching module 62 then uplifts the calculated price data for the potential match order by a commission rate identified within a record in the commission rules database 54 for that combination of buy side and sell side user.
Thus for example in the case of a buy order and a limit price of 260 and a commission of 20 basis points, the limit price would be recalculated to be 260 x (1 + 0.002) = 260.52. Conversely for a sell order of the same price on which a purchaser was charging a 20 basis point commission the limit price would be recalculated to be 260 x (1-0.002) = 259.48.

After the calculated price for the potential match has been calculated and uplifted if required, it is stored in a list (S10-9) before the order matching module 62 (S10-10) determines whether the final potential match order in the list of potential matches has been reached.

If this is not the case the next potential match order is selected (S10-11) and the order matching module 62 determines price data for that potential match (S10-4, S10-9) before checking once again (S10-10) whether the final potential match in the list of potential matches has been reached.

Eventually, when price data has been generated and stored for each of the potential match orders in the list of potential match orders, the order matching module 62 then checks (S10-12) whether the order currently being processed identifies any trading venues 188 with which public trading is permitted. If this is the case the order matching module 62 retrieves the current best offers available from the public order books 15 of the identified exchanges for the instrument of the order currently being processed and adds price data and an identifier of the exchange to the list of possible matches for the order. Finally, after any public orders have been added to the potential match list, the list of potential match orders and their prices are rearranged into a list of declining prices with the best potential match at the head of the list. Where two orders have the same price, the potential matches are further ordered by creation time 174.

Returning to Figure 7A, at this stage the order processing module 62 will have a list of potential match orders for matching the order currently being processed. If the list is an empty list then no potential matches exist and the next order for matching is selected (S7-7) and the order matching module 62 attempts to generate (S7-6) a list of potential matches for that next order.

When the order matching module 62 generates a list of potential match orders and a list of prices which contains at least one order, the order matching module 62 then (S7-8) selects the best order at the head of the list to determine whether the order currently being processed can be fulfilled.

The order matching module 62 then determines (S7-9) whether it is possible to match the order currently being processed with the best identified match.

This is achieved by the order matching module 62 initially calculating a limit price for the current order being processed. That is to say the order matching module 62 determines a price utilising the limit price 180 of the order currently being processed or alternatively in the case of an order having a price parasitical option identified by trading method data 186, the order matching module 62 generates a price utilising a price data obtained from an appropriate public order book 15. This price is then varied by an appropriate commission if the best match order includes validation data 196 requiring agency normalisation where the best match order has a user ID 170 identifying a buy side firm and the order currently being matched as an order identification 170 indicating a sell side firm.

The order matching module 62 then compares the calculated price for the order currently being matched with the price for the potential best match order. In the case of a current order having direction data 178 indicating a buy order, the determined best match will be permitted if the best match price does not exceed the price for the order currently being processed and the trading methods data 186, order size limits 190, time limits 192, excluded parties 194 or validation data 196 of the current order do not exclude the possibility of matching to the best match.

Similarly in the case of a sell order as indicated by sell direction data 178, provided that the price for the sell order currently being processed is no more than the price associated with the best match order and none of the trading methods data 186, order size limits 190, time limits 192, excluded parties 194 or validation data 196 of the current order prevents the current order being matched with the best match order, the order matching module 62 proceeds to match the current sell order with the best match buy order from the head of the list.

Where two orders are matched, the order matching module 62 initially (S7-10) generates a new matched order record within the matched orders database 64.

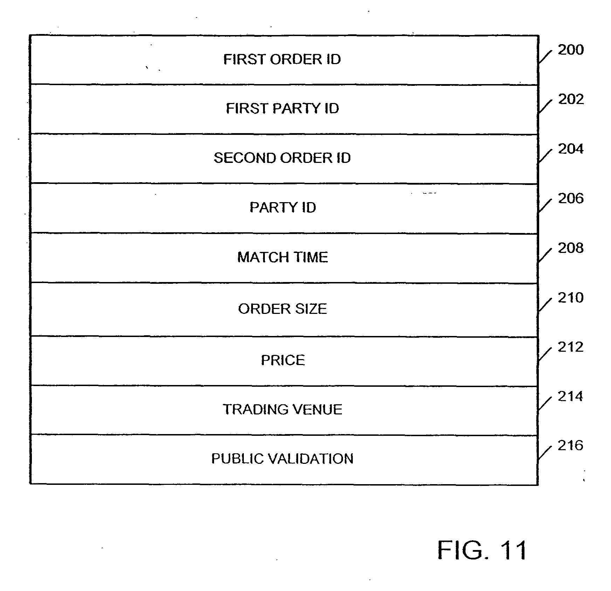

Figure 11 is a schematic block diagram of a record generated within the matched order database. In this embodiment the generated records comprise a first order ID 200 and a first party ID 202 corresponding to the order ID 170 and party ID 172 of the order currently being processed; a second order ID 204 and second party ID 106 corresponding to the order ID 170 and party ID 172 of the best match order; a match time 208 corresponding to the current time; an order size 210 being the lesser of the difference between the total order size data 180 and the executed amount data 199 of the two orders being matched and an order size corresponding to the minimum order size defined by the order size limits 190 of the two orders; a price 212 being the match price; a trading venue 214 identifying whether the order which is being matched to the current order being processed corresponds to an order on a public order book 15 and a public validation flag 216 in the case that either of the orders have been matched includes validation data 196 requiring public validation of the order.

Once a new record has been generated within the matched orders database 64 the order matching module 62 increments the executed amount data 199 for the two orders in the current orders database 58 by the determined order size 210 for the new matched order record and if the executed order data of either record then equals the total order size 180, the order matching module proceeds to delete that record from the current orders database 58.

The update commission module 68 then utilises the newly generated matched orders record to calculate (S7-11) an appropriately nominal commission payment for the order. Specifically the update commission modules 68 checks whether the party IDs 202 and 206 of the newly generated record identify a buy side user and a sell side user. If this is the case the update commission module then retrieves from the commission rules database 54 a commission rate applicable to transactions between the buy side user and the sell side user identified in the new record within the matched orders database 64 from the commission rules database 54. The update commission module 68 then updates a record within the accumulated commission database 70.

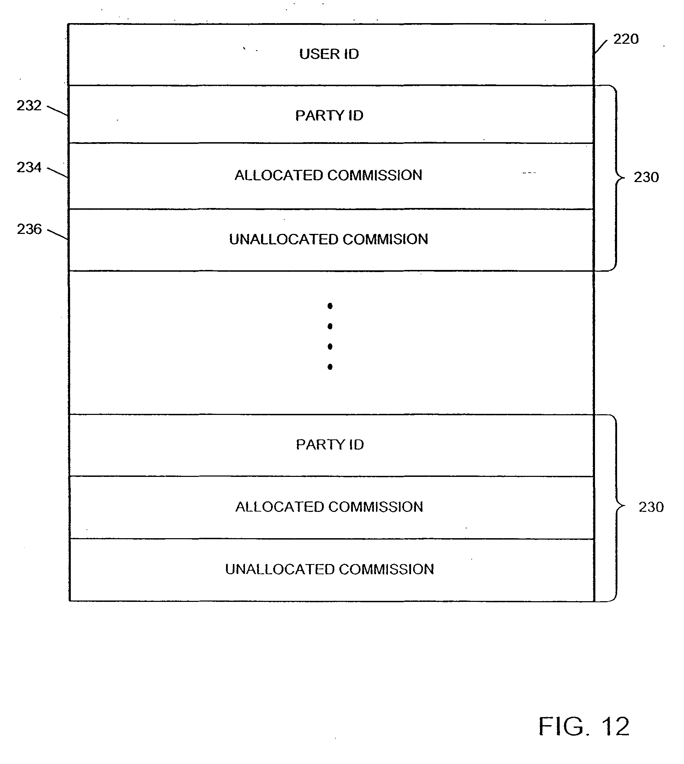

Figure 12 is a schematic block diagram of a accumulated commission record within the accumulated commission database 70. In this embodiment the accumulated commission records comprise for each buy side user a record having a user ID 220 identifying the buy side user to whom the record relates and series of sell side records 230 one for each of the sell side users accessing the trading platform 14. Each of the sell side records 230 comprises a party ID data 232 identifying a sell side user and an allocated commission value 234 and an unallocated commission value 236.

Where an order has been matched between a buy side firm and a sell side firm and neither of the orders includes directed order data 198 the update commission module 68 updates the allocated commission record for the buy side user in the transaction as identified by the user ID 220 by increasing the unallocated commission value 236 associated with the sell side record 230 having party ID data corresponding to the party ID 172 of the sell side firm identified in the new matched order record by a value corresponding to a calculated commission.

Thus for example on an order at a price of 260 and a commission of 20 basis points on an order of 1,000,000, a commission of 260 pence x 1,000,000 x 0.002 = £5,200 would be calculated. This would be achieved by retrieving the appropriate commission rate from a record within commission rules database and multiplying the commission rate by the price 212 and order size 210 for the newly generated matched order record.

After the accumulated commission database 70 has been updated the settlement module 66 reviews (S7-12) the newly generated record within the matched orders database 64 to determine whether the record includes trading venue data 214 identifying a public exchange or alternatively whether the newly generated record includes public validation data 216 requiring the matched order to be made public. If this is not the case, the settlement module 66 utilising the newly generated record within the matched orders database 64 proceeds to initiate settlement of the transaction corresponding to the matching of the two orders in a conventional manner and send confirmations of the match to the parties involved by the communications network 3.

However, instead of instructing the parties to pay any determined commission to one another, the instructions are revised so as to cause any payment in respect of commission to the operator of the trading platform computer 8.
Thus for example in the case of an order of 1,000,000 at a seller's commission rate of 20 basis points and a price of 260, an instruction to the purchaser to pay £2,605,200 would be dispatched together with an instruction to the seller to sell 1,000,000 shares. Subsequently £2,600,000 would be paid to the seller and £5,200 would be retained by the operator of the trading platform computer.

In another example, where the 20 basis point commission to be charged by a party buying 1,000,000 shares at a price of 260, the purchaser would be required to pay £2,600,000 and the seller £5,200. Subsequently, the £2,600,000 would be passed to the seller and the £5,200 would be retained by the operator of the trading platform.

Where public validation is required or alternatively where an order has been matched to a public order, instead of initiating settlement through the settlement module 66 the settlement module 66 sends (S7-14) an instruction to the public exchange 6,7 where an order has been matched or alternatively to the public exchange where the information about the matching of the two orders is to be made public.

Specifically, in the case of matching a public order to an order in the current orders database, settlement module 66 sends an instruction that the order being matched is to be placed on the public order book where it will be automatically matched to the available order retrieved from the public order book. Settlement of the public order is then effected through that exchange.

In the case of two orders which are matched internally within the current orders database 58 where public order validation is required, the settlement module 66 dispatches to the public order book 15 of the public exchange an order representing both sides of the order being processed. These will automatically get matched by the public exchange 6,7 and hence will enable the public exchange to update their price data.

In the case of any orders where a commission is due for payment instructions sent by the settlement module 66 will include the instructions to the exchange that the commission due on the matched order is to be paid to the operator of the trading platform so that that commission will be available to pay commissions represented in the accumulated commission database 70.

After either the settlement module 66 has initiated settlement of a matched order (S7-13) or alternatively after the settlement module 66 has dispatched instructions to a public exchange (S7-14), the order matching module 62 proceeds to select (S7-7) the next order in the current database as the order to be processed for matching and attempts to match that order (S7-6).

If it is determined (S7-9) that because of the limit price 184 the selected trading methods 186, the order size limits 190, time limits 192, excluded parties 194, or validation data requirements 196 of the order currently being processed it is not possible to match the current order to the potential match at the head of the list of matches, the order processing module 62 proceeds to determine (S7-15) whether the order at the head of the list of potential matches has previously been attempted to be matched to the order currently being processed. If this is not the case, the order matching module 62 causes (S7-16) a record to be generated within the excluded orders database identifying the order currently being processed and the reason why it was not possible to match the order currently being processed with the best match at the head of the generated list.
After the excluded orders database 72 has been updated (S7-16) or alternatively after it has been determined that the current order has previously been attempted to be matched to the order at the head of the list of potential matches (S7-15) the order processing module 62 then (S7-17) determines whether the final order in the list of potential matches has been reached. If this is not the case, the head of the list of potential matches is deleted and the next order at the new head of the list is then selected for potential matching (S7-18) before it is determined whether or not the restrictions on trading identified by the current order do or do not prevent matching of that order at this time (S7-9).

When the last order in the generated list of potential matches is reached, the order matching module 62 (S7-19) determines whether the current order being processed is the final order in the current orders database 58. If this is not the case the order matching module 62 selects the next order for matching and attempts to match that order (S7-7, S7-6, S7-19).

Eventually when the final order in the database is reached the order matching module 62 causes the order input and amendment module 56 to check (S7-20) whether any amendments or modifications of orders are to be made to the entries in the current orders database 58. If no instructions to modify any of the records has been received from any of the order creation and amendment modules 26, the processing of the order matching module 62 ends. If any amendments had been made the order matching module 62 then causes the order input and amendment module 56 (S7-21) to update the entries in the current orders database 58 before once again selecting (S7-5) an initial order for matching.

If when an order is received it is determined that the directed order data 198 of the received order indicates that the order is a directed order, rather than automatically generating a new order record for storage in the current order database 58, the order input and amendment module 56 initially checks (S7-22) whether the newly received directed order can be matched with any existing order in the current order database 58. This is achieved in exactly the same way in which the determination of possible matches is made for an ordinary order and will not be repeated here.

If it is determined that a received directed order can be matched, to the extent that a matches are possible an order record is generated (S7-23) for the newly received directed order where the total order size 180 of the newly generated order record corresponds to the amount of the directed order which can be matched. This new order record is then processed in exactly the same way as has previously been described. As the determination of the existence of matching orders from within the current order database 58 has already been made, it is inevitable that this new order record will be matched off to existing orders within the current orders database 58 by the ordinary processing of the order matching module 62. As a result new matched orders records for the directed order will be generated within the matched orders database 64 in the same way as previously been described.

When a new matched order record for a directed order is generated within the matched orders database 64, the update commission module 68 then calculates a commission payable on the directed order in the same way as previously been described. However in contrast to an undirected order when updating the accumulated commission record having a user ID 220 corresponding to the buy side user in a matched order the update commission module 68 causes (S7-24) the sell record 230 having a party ID 232 corresponding to the directed order data 198 of the directed order to be incrementing by the calculated commission.

The effect of updating the commission in this way is to cause a commission payment for the amount by which the directed order can matched by orders existing within the current orders database 58 to be allocated to the sell side firm identified by the directed order data 198. Thus by processing directed orders in this way a buy side firm is able to pay a commission to a sell side firm identified by the directed order data 198 even though the order is automatically matched by the order processing system 14 and fulfilled by another firm at the desired price for the order.

Once the accumulated commission database 70 has been updated the settlement module 66 then dispatches instructions to the parties whose orders have been matched by the order matching module 62 in the same way as has previously been described.

The order input and amendment module 56 then forwards (S7-25) to the user identified by the directed order data 198 an order record in which the executed amount 199 corresponds to the amount of the order which has been matched thereby informing the party to whom the order has been directed that a directed order has been received and to the extent to which the order has already been fulfilled. The party to whom the order has been directed can then trade the rest of the order in a conventional manner.

Should it not be possible for the order input and amendment module 56 to identify (S7-22) any orders within the current order database 58 which can match any part of a directed order, the directed order is not modified and merely forwarded (S7-26) in its original form to the party identified by the directed order dated 198 where the order can be processed in a conventional manner.

The provision of a facility for allowing directed orders therefore benefits users in two ways. Firstly, by permitting directed orders, buy side firms are able to forward payments to sell side firms for their non-broking activities. Secondly, by having order input and amendment module 56, check whether an order can be fulfilled by existing orders, the buy side firm is able to receive best price for their directed order and hence avoid the limitations of only having the order processed by the selected sell side firm. Further, the counter parties involved in matching a directed order also benefit since although they will not receive any commission payment on the order, they will benefit from the increased liquidity which arises from matching the order.

### Commission Allocation and Payments

As a result of matching orders by the order processing system 14, a series of records are generated within the accumulated commission database 70. These records are indicative for each buy side firm the amount of commission they have been charged, and an indication of that the extent to which commission has been assigned to sell side firms as a result of the passage of directed orders and undirected order matching. The allocate commission module 30 on the buy side trading modules 10 and the commission allocation module 78 of the order processing system 14 can then be used to amend these records as will now be described.

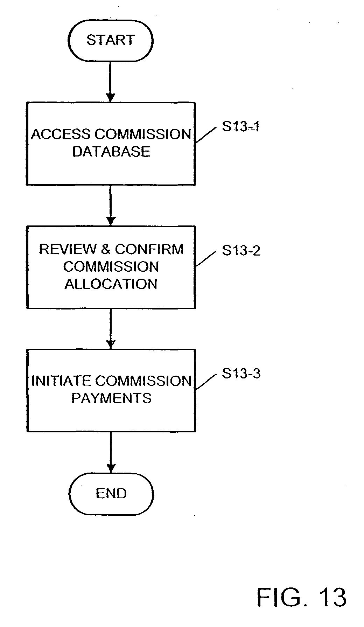

Referring to Figure 13 which is a flow diagram of the processing of the allocate commission module 30 and the commission allocation module 78, utilising the allocate commission module 30 of the trading module 10 on the buy computers 1,2 buy side users are able to send signals from their computers 1,2 via the communication network 3 to the trading platform computer 8. This signal is then received by the commission allocation module 78 of the order processing system 14. When such a signal is received the commission allocation module 78 retrieves (S13-1) the record from the communication commission database 70 that has a user ID 220 corresponds to the user from whom the signal was received and dispatches a copy of the record via the communication network back to the buy computer 1,2.

When a copy of a record is received by the computer 1,2 the allocate commission module 30 then generates a user interface enabling the user to allocate the accumulated commission (S13-2).

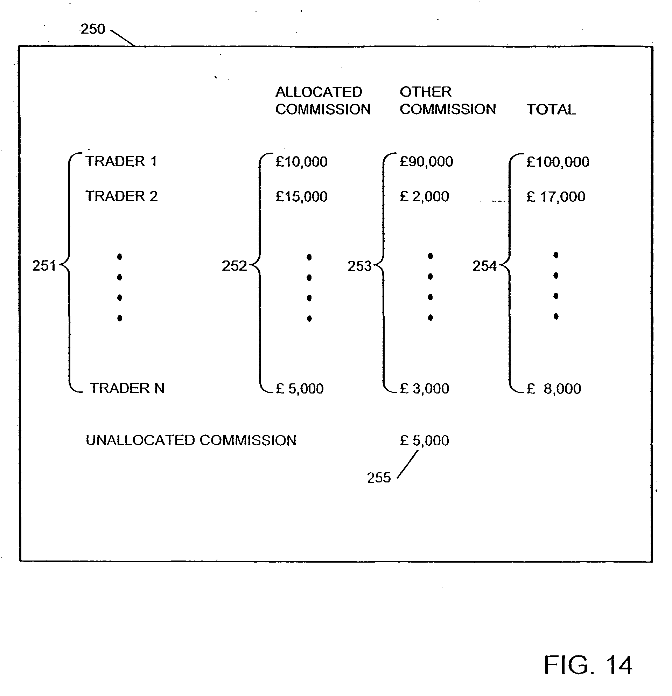

Figure 14 is an exemplary illustration of a user interface 250 for allocating commission.

In this embodiment the user interface 250 comprises a list of traders 251 corresponding to the traders identified by the party identification numbers 232 of the seller records 230 included in the record received by the allocated commission module 30. Adjacent to the list of traders 251 is a list of allocated commission values 252 where the allocation commission values correspond to the allocated commission values 234 of the seller records 230 included in the record received by the allocate commission module 30. Next to the list of allocated commissions is a list of unallocated commissions 253 comprising values corresponding to the unallocated commission values 236 of the seller records included the record received by the allocate commission module 30. In this embodiment a third column of values 254 is also provided which is the sum of the allocated and unallocated commissions associated with each of the traders. Finally beneath the list of traders and the allocated commissions is an unallocated commission value 255 which is initially set to zero.

Utilising a keyboard or another input device such as a mouse the buy side user using the allocate commission module 30 is able to amend the unallocated commission values 253 in the user interface. When a user changes any of these values the total values in the final column 254 and the unallocated commission value 255 are automatically updated to take account for the changes in the allocated commission.

In this way the buy side user is able to identify to the allocate commission module 30 which of the sell side firms are to receive the unallocated commission. When a buy side user is satisfied with the commission allocations the user then causes the allocate commission module 30 to dispatch a revised commission record to the order processing system 14 via the communication network 3 where each of the seller records 230 is amended so as to set the allocated commission 234 to a value corresponding to the total value 254 associated with the trader identified by the party identification number 232 of the seller record 230 and with the unallocated commission value 236 set to zero.

When such a record is received by the commission allocation module 78 the commission allocation module 78 updates the corresponding record within the communicated commission database 70 and informs the commission payment module 80 that the update has occurred.

When the commission payment module 80 has received notification from the commission allocation module 78 that all of the buy side users have allocated their accumulated commissions, the commission payment module 80 informs (S13-3) the users of the allocated commission to be paid as identified by the records within the accumulated commission database. The commission payment module 80 then causes those payments to be made and resets the allocated commission values 234 of the record within the accumulated commission database to zero to reflect the fact that the allocated commissions has been paid to the sell side firms in the proportions set by the buy side firms utilising their commission allocation modules 30.

### Market Review Module

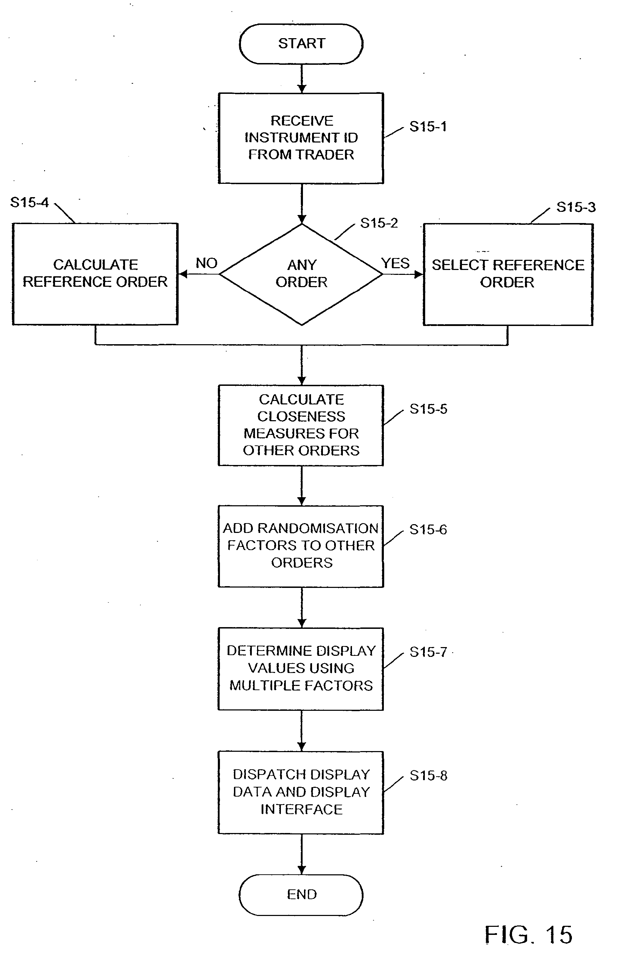

The interaction of the market review modules 28 of the trading modules 10,11 and the interface update module 60 of the order processing system 14 will now be described in detail with reference to Figures 15, 16 and 17.

As previously discussed, the interface update module 60 is arranged to interrogate the current orders database 58 and generate display data representative of the content of records stored within the current orders database 58 where the display data is such to give users an indication of the content of orders submitted to the order processing system 14 but which prevents users from obtaining specific details relating to other parties submitted orders.

Referring to Figure 15 which is a flow diagram of the processing performed by the interface update module 60, initially the interface update module 60 waits until it receives (S15-1) an instruction from one of the market review modules 28 from the trading modules 11,10 on the buyer computers and seller computers 1,2,4,5. In this embodiment these instructions include data identifying the user identification number for the user of that module and an instrument identifier.

When an instruction containing an instrument ID and a user ID is received by the user interface module 60 the interface update module 60 then (S15-2) interrogates the current orders database 58 to determine whether the current orders database 58 has stored within it any orders having party identification data 172 and instrument data 176 corresponding to the received user ID and instrument ID data. If this is the case, this will indicate that the user requesting market review data has at least one order currently present in the current orders database 58.

The interface update module 60 then (S15-3) identifies within the current orders database of 58 all of the orders having the party ID 172 and instrument data 176 corresponding to the user ID and instrument ID received from a market review module 28 and proceeds to select one of the identified orders as a reference order for generating display data.

In this embodiment this is achieved by the interface update module 60 selecting as the reference order the order having the best price. That is to say the interface update module 60 checks the limit prices of the orders having party identification 172 and instrument data 176 corresponding to the received data. Where the buy/sell data 178 of the orders indicate buy orders, the order having the highest limit price 184 is identified and used as a reference order. In the case of orders having buy/sell data 178 indicating sell orders the order having the lowest limit price 184 is used. Where orders have trading methods data 186 indicating price parasitical trading methods, instead of the limit price 184 a calculated best price from the current market price obtained from the public exchanges is assigned to an order. Once prices have been calculated for all orders, the existing order having a price which is most likely to be matched is then identified as a reference order.

If the interface update module 60 determines (S15-2) that none of the order records within the current order database 58 has party identification data 172 and instrument data 176 corresponding to the user identifier and instrument identifier received from a market review module 28, the interface update module 60 calculates (S15-4) a reference order for the purposes of generating display data.

In this embodiment a reference order for a particular instrument is calculated by storing historical data for instrument trades and using the historical data to generate a reference order. One way in which this might be done is to randomly assign a buy or sell value for the reference order and then generating a reference order with having a price corresponding to the price of the previous nights close for the instrument identified by the received instrument data and a size corresponding to 2% of the normal volume of trade in that instrument the previous day and where no other restrictions are placed on the manner in which a reference order is to be matched.

After either data for a reference order has been calculated (S15-4) by the interface update module 60 or alternatively data for a reference order has been determined by selecting (S15-3) one of the order records from the current orders database 58, the interface update module 60 then (S15-5) proceeds to calculate for all order records within the current order database 58 having an instrument data 176 corresponding to the identifier received from a market review module 28 which do not have as a party identifier 172 the party identifier corresponding to the party identifier received from the market review module 28 a series of closeness measures.

Specifically, initially a difference value is calculated based on the buy/sell data 178 of the orders in the current order database 58 and the reference order which share the same instrument data 176. In this embodiment a difference value of 1 is assigned where the buy/sell data 178 corresponds to the buy/sell data of the reference order and a value of zero is assigned where it does not.

In the case of price data, a price for each of the orders is determined in the same and as previously been described in relation to calculating prices for matching orders. A relative percentage difference between the calculated price for each of the orders and the price for the reference order is then determined and a value indicative of the extent to which the two prices prevent a match is calculated.

Similar closeness measures are then calculated based on the potential size of an order as determined by the difference between a total order size 180 and an excluded amount 199. Finally any restriction placed on ordering is assigned a value of 1 or zero depending on whether the restrictions present for an order as defined by the trading methods 186, time limits 192, excluded parties 194 and validation data 196 would permit or prevent matching the order in the current orders database with the reference order.

As a result of this processing the interface update module 60 will generate a series of numbers for each of the orders order records within the current orders database 58 having the same instrument data 176 and different party identifier 172 to the reference order. Each of the values will be indicative of the relative closeness of match between the order and the reference order.

After this closeness data has been generated the interface update module 60 then scales each of these values using a set of random numbers to calculate (S15-6) a set of weight values. Specifically, the interface update module 60 determines a set of random numbers for scaling the closeness measures using the order identification data 170 of the orders.

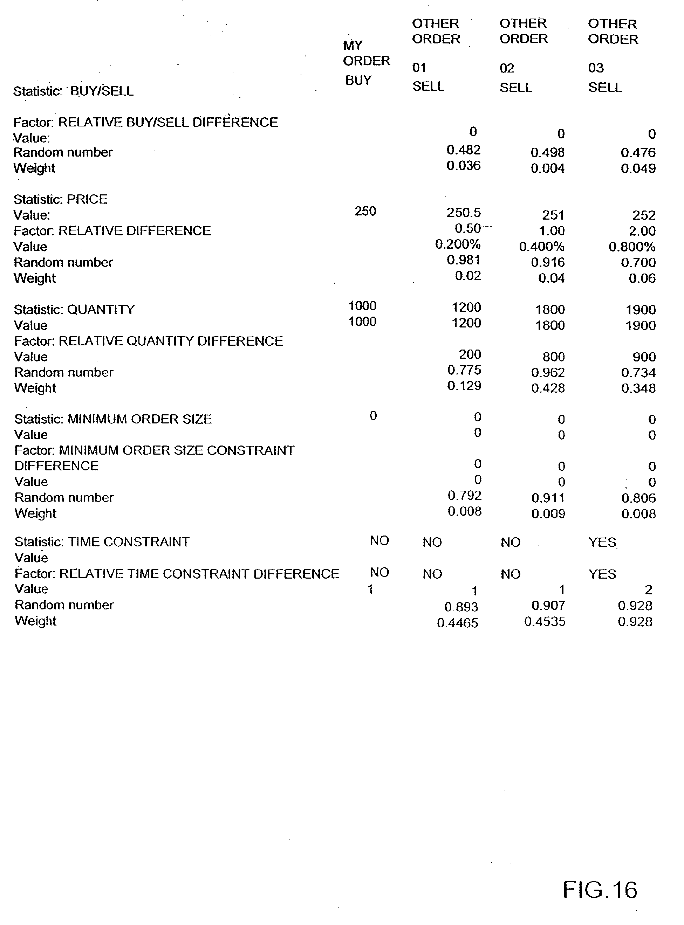

Figure 16 is an illustrative table showing values calculated for three example orders relative to a reference order with random numbers and resulting weight values. As can be seen for each statistic defining an order a relative difference value is calculated and then a weighting value, a function of the difference value and a random number is determined. These weighting values are indicative of the underlying difference values but are obscured as a result of deliberate errors introduced by the random scaling factors and hence the weight factors only provide limited true information about the closeness of the other orders.

Once the closeness measures have all been scaled, a set of display values is then calculated (S15-7) by determining a set of values each using a selection of the calculated weighting values. Thus for example one individual display value for an order might be calculated by taking an average value of for example the weighting values of the buy/sell data, price data and quantity data whereas another display value might be determined by the average of the weighting values for the presence of time constraints, the minimum order size and the difference in order quantity multiplied by another number for example 256.

Once the display values have been generated for all of the orders, the interface update module 60 dispatches (S15-8) these values to the market review module 28 in which a request had been received. Thus by having the market review module 28 periodically dispatching user ID and instrument data, a user is able to utilise the market review module 28 to receive display data to monitor the existence of other orders in the current order database 58. When the display data is received the market review module 28 then generates a user interface display from the received display data.

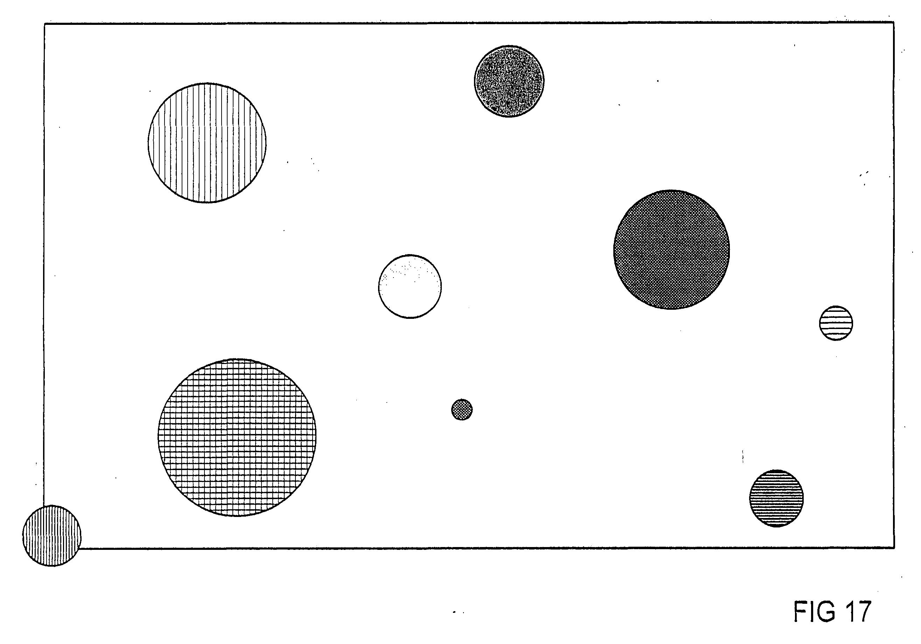

Figure 17 is an exemplary illustration of a user interface representing an existence of other orders in the current order database 58 utilising the display data generated by the interface update module 60. In the exemplary illustration of Figure 17 each order in the current orders database 58 is represented by a circle with the reference order being represented at the bottom left hand corner of the interface and the other orders input by the users are represented by other circles. The position, size and colour assigned to an order represented on the user interface is generated utilising the calculated display data and hence the relative differences between the position, size and colour of the other circles on the interface is indicative of the differences between the reference order and those other existing orders.

As each of the display values is generated utilising a number of scaled difference measures, it is not possible for a user to precisely identify the differences between orders. However, the relative differences in size, shape, colour and position will indicate to a user, the extent to which their reference order will need to be amended if it is to be matched with the other existing orders. Thus for example where the reference order is prevented from being matched by many different factors, the displayed circles, will be remote in distance and have very different sizes and colours from the circle for the reference order. In contrast if the representation of the other orders are similar in terms of position, appearance and location, to the reference order circle, only minor amendments will be required for a match to be achieved.

### Hint Interface Module

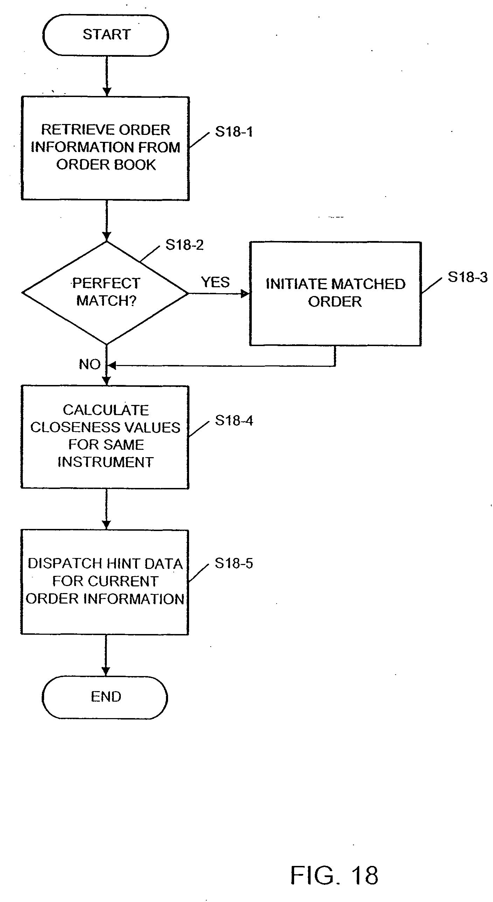

The interaction of the hint interface module 24 of the trading modules 10,11 and the order processing system 14 will now be described in detail with reference to Figure 18 which is a flow diagram of the processing performed by the hint interface module 24 and the order processing system 14.

In this embodiment the hint interface module 24 is arranged to generate a user interface display indicating to a user the likelihood of uncommitted orders present on their order book 12 being matched with existing orders in the current orders database 58. To this end, the hint interface module 24 is arranged to access (S18-1) the order book 12 present on a user's computer 1,2,4,5 and dispatch an order record generated for that order via the communications network 3 to the trading platform computer 8.

When this order data is received by the order processing system 14 on the trading platform computer 8, it is received by the interface update module 60. In the same way as has previously been described in relation to the order matching module 62, the interface update module 60 then initially determines (S18-2) whether any of the orders retrieved from a user's order book 12 can match orders presently existing within the current orders database 58. If this is the case, in this embodiment the interface update module 60 then dispatches (S18-3) an instruction back to the hint interface module 24 which then causes the order creation and amendment module 26 to dispatch an order corresponding to the existing order on the user's order book 12 to the trading platform computer 8 where it is processed in the manner in which has previously been described.

Thus in this way if a user has an order on their order book 12 which can be matched, rather than giving the user information about the likelihood of matching that order the hint interface module 24 and the interface update module 60 are arranged to cause the order to be automatically dispatched. In this way, a user is prevented from obtaining exact information about orders existing in the current orders database 58 without being prepared to commit an order to the order processing system 14.

If it is determined (S18-2) that an exact match for orders on the user's order book 12 do not exist, the interface update module 60 then (S18-4) generates for the order records received from the hint interface module 24 a set of closeness values and weighting values for each order and the corresponding orders for the same instrument currently existing within the current orders database 58. These closeness values and weighting values are calculated in exactly the same way as has previously been described in relation to the generation of display data by the user interface update module 60 and will not be repeated here.

As a result of processing the orders, for each order an existing order within the current order database 58 associated with the lowest average set of weighting values can be identified. In this embodiment, hint data being for each of the orders on the user's order book 12, hint data comprising a value corresponding to the lowest average weighting value generated for the order based on the orders currently existing within the current order database 58 is dispatched (S18-5).

This generated hint data will range from a low value where an order record within the current orders database 58 exists which is very likely to match the order retrieved from the order book 12, to a higher value where none of the orders which exist in the current order database are close to matching an order from the order book 12. This generated hint data can then be converted into a visual display in for example a form of a series of colours indicating to a user the likelihood that if the order is committed to the trading platform computer 8 that a match will be possible.

### Other Embodiments and Modifications

In the above described embodiment an order having directed order data 198 is checked against existing orders within the current orders database 58 before being forwarded to a broker. It will be appreciated that in an alternative embodiment the order input and amendment module 56 could also attempt to match a received order with orders existing on the public order books 15 of public exchanges 6,7 before forwarding any remaining element of an order to the indicated broker. An advantage of such a system would be that when an order was routed to a broker, ultimate purchases of assets would be even more likely to achieve best price for their orders.

In the above embodiment, a system is described in which commission payments are calculated based on a commission rate associated with pairs of buy side and sell side users by records stored within the trading rules database 52. In other embodiments, it may be desirable that sell side firms are able to discount their commission rates for particular trades where the sell side firms wish to have increased liquidity in certain instruments. One way in which this might be achieved is by providing the sell side trading modules 11 with an order creation and amendment module 26 which enables sell side users to include discount data in an order. When such an order was processed by the order matching module 62, the discounted commission rate could be applied when matching orders and calculating accumulated commission.

Alternatively, sell side users could input data indicating a range of commission which they are prepared to apply to trades. In such a system, the order matching module could then calculate a best price for each trade using the lowest commission rate applicable to the trade. When a buy side order is being matched the best price for an order using the discounted rates could then be identified. Where more than one order could potentially match the buy side order, the second best price could also be identified. A commission for the trade with the counter party identified with the best price could then be set at just below the cost of the next best available price (i.e. just better than the second best price). In the case of an order which is matched to only a single order, a second best price could be determined by applying the usual commission rate for a trader to the order which resulted in the match.

In the above embodiment an interface update module 60 is described which provides users with indications of the existence and content of other orders in the order processing system but which prevents users from establishing the actual details of those other orders. In the described embodiment, this is achieved by using randomisation factors to obscure measures of relative closeness of match between a reference order and other orders in the system.

It will be appreciated that a similar result could be achieved in other ways. In particular instead of using a number of randomisation factors to obscure the actual content of orders, orders could be placed within a number of different categories dependent upon the likelihood of a match relative to a reference order and each category could be associated with a distance value to which a random amount could be added or subtracted.

Thus for example, in a simple system order could be categorised into the following categories:
CATEGORY ONE: order of same type as reference order
CATEGORY TWO: order of different type, order size and price both differ by more than 10% from reference order
CATEGORY THREE: order of different type, order size or price differ by more than 10% from reference order
CATEGORY FOUR: order of different type, order size and price differ by less than 10% but more than 5% from reference order
CATEGORY FIVE: order of different type, order size and price differ by less than 5% from reference order

Each category could then be assigned a base distance and distance values for individual orders could be calculated by applying adding or subtracting a random about from the base distance value for the category assigned to a category. Co-ordinates a distance away on the display from a marker indicating the reference order corresponding to the calculated distance value for each of the other orders could be determined and an appropriate marker displayed at that position in a display.

Thus in this way by assigning a high base distance to category one orders and progressively smaller base values to successive categories a means to display the other orders in the system in such a way to indicate the likelihood of orders being matched but which does not disclose precise details of other existing orders is provided.

It will be appreciated that the above is a simple illustrative example of a system and that in an actual working system many other finer divisions for categorising orders would be provided. Further instead of assigning each category a base distance a band of allowable distances could be defined for each category and a distance for an order randomly assigned from the permissible distances for orders of that category. Where multiple categories exist with overlapping bands the content of orders would be further obscured.

In order to further disguise when amendments are made to existing orders, the interface update module 60 could be arranged to update a display at randomised intervals. Alternatively for orders in a system, two sets of coordinates for representing an order could be determined for each interval either using the method described in the application or the system described above and the interface update module could be arranged to update a display so as to cause orders to appear to move between an initial representation using a first set of coordinates to become a second representation identified by the second set. In this way the modification of other users' orders would not become apparent.

Additionally although reference has been made to representing individual orders in a display, it will be appreciated that the interface update module 60 could be able to generate a single representation in a display representing many orders of the same type or alternatively could divide large orders into multiple smaller orders and represent each of the divide orders. The algorithms to determine when and whether to divide orders for representation could be based upon whether an order was more representative as an average order in the market if it were to be merged or divided into executable parts. Alternatively, orders could be divided to give the impression of greater liquidity existing within the order processing system.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source or object code or in any other form suitable for use in the implementation of the processes according to the invention. The carrier be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When a program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. A computer apparatus for generating data representative of the content an order record defining a plurality of parameters of an order, the apparatus comprising:
means for retrieving an order record from an order database configured to store order records;
means for determining a reference order having a plurality of parameters;
means for calculating for a retrieved order record a plurality of difference values indicative of the closeness of match between said parameters of said reference order and corresponding parameters of a retrieved order record retrieved by said retrieving means;
means for calculating for each of said plurality of difference values a weighting value utilising a respective difference value and a generated random number; and
means for generating as output data representative of a retrieved order record a number of items of output data, each item of output data being derived by processing a plurality of selected calculated weighting values for said order.

2. Apparatus in accordance with claim 1 wherein said means for determining a reference order comprises a data store storing data defining a reference order having a plurality of parameters.

3. Apparatus in accordance with claim 1 wherein said means for determining a reference order comprises a receiver operable to receive data indicative of a user and an instrument, wherein said means for determining a reference order is operable to utilise data received by said receiver to select an order from said order database to determine a reference order having a plurality of parameters.

4. Apparatus in accordance with claim 3, wherein said means for determining a reference order is operable to retrieve from said order database order records including data corresponding to data received by said receiver;
to associate each of said retrieved order records with a price; and
to select as said reference order one of said retrieved orders on the basis of the prices associated with said retrieved orders.

5. Apparatus in accordance with any preceding claim wherein said means for calculating weighting values is operable to calculate weighting values by scaling difference values by generated random numbers.

6. Apparatus in accordance with any preceding claim wherein said means for calculating weighting values is operable to calculate weighting values by adding or subtracting a generated random number from a calculated difference value

7. An apparatus in accordance with any preceding claim wherein said means for calculating weighting values is operable to generate for each weighting value a random number wherein the same random number is generated for determining a weighting value from a difference value determined on the basis of the difference between the same order record and the same reference order.

8. Apparatus in accordance with any preceding claim wherein said means for generating output data is operable to generate items of output data by determining average values of a plurality of calculated weighting values for a record.

9. A computer network comprising:
a computer apparatus in accordance with any preceding claim;
a plurality of computer terminals; and
communication means for transmitting data between said computer apparatus and said computer terminals,
wherein said computer terminals are each operable to receive output data generated by said computer apparatus and to utilise said received output data to generate a user interface display.

10. A computer network in accordance with claim 9, wherein said plurality of computer terminals are operable to generate a user interface display on the basis of received output data wherein said items of output data determine within said generated user interface display the position, size, shape or colour of a marker indicative of an order for which output data has been generated.

11. Computer apparatus for matching order data comprising:
a receiver for receiving order data, said order data including a user identifier;
a commission rate database configured to store data associating pairs of user identifiers with commission rates; and
an order matching engine operable to process order data received by said receiver to associate said order data with price data and to identify order data for matching on the basis of said order data and said associated price data,
wherein said order matching engine is arranged to determine price data for determining whether a pair of orders are to be matched by selecting a commission rate on the basis of the user identifiers included in a pair of orders to be matched and calculating price data for orders of a pair of orders utilising selected commission value.

12. Apparatus in accordance with claim 11, wherein said receiver is operable to receive order data including a limit price, said order matching engine being arranged to determine price data on the basis of said limit price and said selected commission rate.

13. Apparatus in accordance with claim 11 or 12, wherein said order matching engine is operable to determine price data by retrieving a current market price and to determine said price data utilising said selected commission rate and said retrieved current market price.

14. Computer apparatus in accordance with any of claims 11-13, wherein said order matching engine is operable to calculate price data for a pair of orders by incrementing or decrementing a calculated price for an order utilising said selected commission rate.

15. A computer apparatus in accordance with any of claims 11-14, wherein said receiver is operable to receive order data including a commission variation wherein said order matching data is arranged to determine price data for determining whether a pair of orders are to be matched utilising a commission rate calculated on the basis of said variation data.

16. Computer apparatus for routing order data between users, the apparatus comprising:
a receiver operable to receive order data defining an order for matching and an order recipient;
an order database configured to store data defining one or more orders; and
a matching engine operable to determine whether order data received by said receiver can be matched to data stored in said order database, wherein said matching engine is responsive to determining that received order data can match data stored in said order database to store order data corresponding to said received order data which can be matched in said order database and to dispatch to an order recipient data representative of the extent to which said received order data could not be matched with data in said order database.

17. Computer apparatus in accordance with claim 16, further comprising means for determining a commission payment to be paid on the matching of a received order wherein said means for determining a commission payment is operable to generate a record of said determined commission associated with said order recipient.

18. Computer apparatus in accordance with claim 16 or 17, wherein said matching engine is operable to identify existing orders on public exchanges and determine whether order data received by said receiver can be matched to an order existing on public exchanges, wherein said matching engine is responsive to determining that received order data can match an order on an existing public exchange to dispatch order data to said public exchange corresponding to said received order data which can be matched and to dispatch to an order recipient data representative of the extent to which said received order data could not be matched with an existing order on a public exchange or data in said order database.

19. Computer apparatus in accordance with any of claims of 16-18, wherein said matching engine is responsive to determining that received order data can not be matched to dispatch to an order recipient data representative of said received order data.

20. An order processing apparatus comprising:
a commission rate database configured to store data defining commission rates applicable to trades between identified pairs of users;
an order matching engine operable to receive order data and process received order data to identify order matches;
a settlement engine operable to generate settlement instructions for effecting a transaction corresponding to the matching of orders by said order matching engine;
wherein said settlement engine is operable to utilise data stored in said commission rate database to calculate commissions due on transactions corresponding to the matching of orders by said order matching engine and to cause said generated settlement instructions to include an instruction that said calculated commission is paid to a third party;
said apparatus further comprising:
a commission database responsive to said settlement engine to store data representative of commissions to be paid on transactions effected by said matching engine;
a commission amendment module operable to permit user entry of data identifying the distribution of commissions recorded by said commission database; and
a payment module operable to generate instructions indicative of the distribution of commissions in accordance with said input indications of distribution.

21. An order processing apparatus in accordance with claim 20, wherein said order matching engine is operable to determine for received orders price data and to identify order matches based on said received order data and said calculated price data for said orders.

22. An apparatus in accordance with claim 21, wherein said order matching engine is operable to receive order data including user identifiers wherein said order matching engine is operable to calculate price data for orders utilising commission rates retrieved from said commission rate database.

23. Computer apparatus for processing order data and identifying matches for orders represented by order data, said apparatus comprising:
a receiver for receiving order data;
a matching engine for processing received order data and identifying pairs of orders suitable for matching; and
a matched orders database responsive to the identification of pairs of order suitable for matching to generate and store a record of said matched orders,
wherein said order data comprises a plurality of items of data defining restrictions on the possibility of an order being matched, and said apparatus further comprises:
an excluded orders database responsive to the determination by said matching that one or more items of data in an order define a restriction which prevents an order from being matched with other received orders to generate a record of the restrictions which prevented said matching.

24. A computer apparatus for generating data representative of the content an order record defining a plurality of parameters of an order, the apparatus comprising:
an order accessing unit operable to retrieve order records from an order database configured to store order records;
a reference order generation unit operable to determine a reference order having a plurality of parameters;
a distance calculation unit operable to categorise a retrieved order on the basis of the differences between said retrieved order and a determined reference order and associate said retrieved order with a distance value on the basis of said categorisation; and
an output unit operable to output distance values associated with retrieved orders.

25. Apparatus in accordance with claim 24 wherein said reference order generation unit comprises a data store storing data defining a reference order having a plurality of parameters.

26. Apparatus in accordance with claim 24 wherein said reference order generation unit comprises a receiver operable to receive data indicative of a user and an instrument, wherein said reference order generation unit is operable to utilise data received by said receiver to select an order from said order database to determine a reference order having a plurality of parameters.

27. Apparatus in accordance with claim 26, wherein said reference order generation unit is operable
to retrieve from said order database order records including data corresponding to data received by said receiver;
to associate each of said retrieved order records with a price; and
to select as said reference order one of said retrieved orders on the basis of the prices associated with said retrieved orders.

28. Apparatus in accordance with any of claims 24-27 wherein said distance calculation unit is configured to associate said retrieved order with a distance value on the basis of said categorisation wherein the distance increases with categorisations increasingly indicative of the retrieved order not being likely to be amended to match said reference order.

29. Apparatus in accordance with claim 28 wherein said distance calculation unit is configured to associate retrieved orders with distance values wherein retrieved orders associated with the same category are associated with distance values within a range of distance values associated with said categorisation.

30. Apparatus in accordance with claim 28 wherein said distance calculation unit is configured to associate retrieved orders with distance values wherein retrieved orders associated with the same category are associated with a base distance value to which a random number is added or subtracted to determine the distance value for the retrieved order.

31. A computer network comprising:
a computer apparatus in accordance with any of claims 25-30;
a plurality of computer terminals; and
a communication network operable to transmit data between said computer apparatus and said computer terminals, wherein said computer terminals are each operable to receive output data generated by said computer apparatus and to utilise said received output data to generate a user interface display.

32. A computer network in accordance with claim 31, wherein said plurality of computer terminals are operable to generate a user interface display on the basis of received output data wherein said items of output data determine within said generated user interface display the position of a marker indicative of an order for which output data has been generated.

33. A data carrier storing interpretable instructions causing a programmable computer to become configured as a computer apparatus in accordance with any of claims 1-8 or 11-32.

34. A data carrier in accordance with claim 33 comprising a computer disc.

35. A data carrier in accordance with claim 33 comprising an electrical signal transferred in a computer network.

36. A computer disc in accordance with claim 34, wherein said computer disc comprises an optical magneto optical or magnetic disc.
